(19) Europäisches Patentamt
European Patent Office
Office européen des brevets

(11) **EP 3 361 439 A1**

(12) **EUROPEAN PATENT APPLICATION**
published in accordance with Art. 153(4) EPC

(43) Date of publication:
**15.08.2018 Bulletin 2018/33**

(21) Application number: **15905844.5**

(22) Date of filing: **09.10.2015**

(51) Int Cl.:
*G06Q 30/02* (2012.01)   *G01C 21/36* (2006.01)

(86) International application number:
**PCT/JP2015/078718**

(87) International publication number:
**WO 2017/061025 (13.04.2017 Gazette 2017/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Fujitsu Limited**
**Kawasaki-shi, Kanagawa 211-8588 (JP)**

(72) Inventors:
• **FUJITA, Takushi**
**Kawasaki-shi**
**Kanagawa 211-8588 (JP)**

• **ANAN, Taizo**
**Kawasaki-shi**
**Kanagawa 211-8588 (JP)**
• **IKEDA, Takuro**
**Kawasaki-shi**
**Kanagawa 211-8588 (JP)**

(74) Representative: **Haseltine Lake LLP**
**Lincoln House, 5th Floor**
**300 High Holborn**
**London WC1V 7JH (GB)**

(54) **ACTION OPTION PRESENTATION DEVICE, ACTION OPTION PRESENTATION PROGRAM, AND ACTION OPTION PRESENTATION METHOD**

(57) An action option presentation apparatus includes an action option presentation processing part configured to extract one or more action options based on route information from a departure location to a destination location that is extracted from departure location information and destination location information, and based on information indicating one or more places at which to drop in during a period of time before travel starts in accordance with the route information.

FIG.1

EP 3 361 439 A1

## Description

[Technical Field]

The disclosures herein generally relate to an action option presentation apparatus, an action option presentation program, and an action option presentation method.

[Background Art]

Conventionally, timetable search systems and transfer guide systems targeted for public transportation users are known.

In these systems, upon receiving a route search request together with a departure location and a destination location from, for example, a terminal device such as a smartphone, a server searches for routes that use available transportation systems and displays candidate routes on the terminal device.

[Related-Art Documents]

[Patent Document]

[Patent Document 1] Japanese Laid-Open Patent Publication No. 2001-337967

[Summary of the Invention]

[Problem to be Solved by Invention]

In such conventional systems, the server presents only candidate routes that use transportation systems even if, for example, there are waiting times, as of a route search request being received by the server, until departure times of the transportation systems.

It is an object of one aspect of the present invention to provide an action option presentation apparatus, an action option presentation program, and an action option presentation method that allows effective use of a waiting time.

[Means to Solve the Problem]

According to an embodiment, an action option presentation apparatus includes an action option presentation processing part configured to extract one or more action options based on route information from a departure location to a destination location that is extracted from departure location information and destination location information, and based on information indicating one or more places at which to drop in during a period of time before travel starts in accordance with the route information.

The above-described part may be a computer-readable recording medium having stored therein a method or a program for causing a computer to execute a process of the part.

[Advantage of the Invention]

It is possible to allow effective use of a waiting time.

[Brief Description of Drawings]

FIG. 1 is a drawing illustrating presentation of action options;
FIG. 2 is a drawing illustrating a system configuration of an action option presentation system of a first embodiment;
FIG. 3 is a drawing illustrating a hardware configuration of a server of the first embodiment;
FIG. 4 is a drawing illustrating a functional configuration of the server of the first embodiment;
FIG. 5A is a drawing illustrating an example of an congestion level and acceptable limit table of the first embodiment;
FIG. 5B is a drawing illustrating in a graph the congestion level and acceptable limit table of the first embodiment;
FIG. 6A is a drawing illustrating an example of a waiting time and acceptable limit table of the first embodiment;
FIG. 6B is a drawing illustrating in a graph the waiting time and acceptable limit table of the first embodiment;
FIG. 7 is a drawing illustrating an example of a transportation satisfaction level table of the first embodiment;

FIG. 8 is a drawing illustrating an example of a drop-in place satisfaction level table of the first embodiment;
FIG. 9 is a first drawing illustrating a transportation database of the first embodiment;
FIG. 10 is a second drawing illustrating the transportation database of the first embodiment;
FIG. 11 is a drawing illustrating an example of a drop-in place database of the first embodiment;
FIG. 12 is a flowchart illustrating an operation of the server of the first embodiment;
FIG. 13 is a drawing illustrating an example of a list of candidates of the first embodiment;
FIG. 14 is a drawing illustrating an example of a display list of the first embodiment;
FIG. 15 is a drawing illustrating an example of an input screen displayed on a terminal device;
FIG. 16 is a first drawing illustrating an example in which a screen for presenting action options is displayed on a terminal device;
FIG. 17 is a second drawing illustrating an example in which the screen for presenting action options is displayed on the terminal device;
FIG. 18 is a drawing illustrating a system configuration of an action option presentation system of a second embodiment;
FIG. 19 is a drawing illustrating a functional configuration of a server of the second embodiment;
FIG. 20 is a drawing illustrating an example of a drop-in place database of the second embodiment;
FIG. 21 is a flowchart illustrating an operation of the server of the second embodiment;
FIG. 22 is a drawing illustrating an example of a list of candidates of the second embodiment;
FIG. 23 is a drawing illustrating an example of a display list of the second embodiment;
FIG. 24 is a drawing illustrating an example in which a screen for presenting action options is displayed on a terminal device of the second embodiment;
FIG. 25 is a drawing illustrating a system configuration of an action option presentation system of a third embodiment;
FIG. 26 is a drawing illustrating a functional configuration of a server of the third embodiment;
FIG. 27 is a flowchart illustrating an operation of the server of the third embodiment;
FIG. 28 is a drawing illustrating an example in which a screen for presenting action options is displayed on the terminal device of the third embodiment;
FIG. 29 is a drawing illustrating a system configuration of an action option presentation system of a fourth embodiment;
FIG. 30 is a drawing illustrating a functional configuration of a server of the fourth embodiment;
FIG. 31 is a flowchart illustrating an operation of the server of the fourth embodiment;
FIG. 32 is a drawing illustrating an example of a list of candidate events of the fourth embodiment;
FIG. 33 is a drawing illustrating an example of a display list of the fourth embodiment; and
FIG. 34 is a drawing illustrating an example in which a screen for presenting action options is displayed on a terminal device of the fourth embodiment.

[Mode for Carrying Out the Invention]

In the following, embodiments of the present invention will be described with reference to the accompanying drawings.

(First Embodiment)

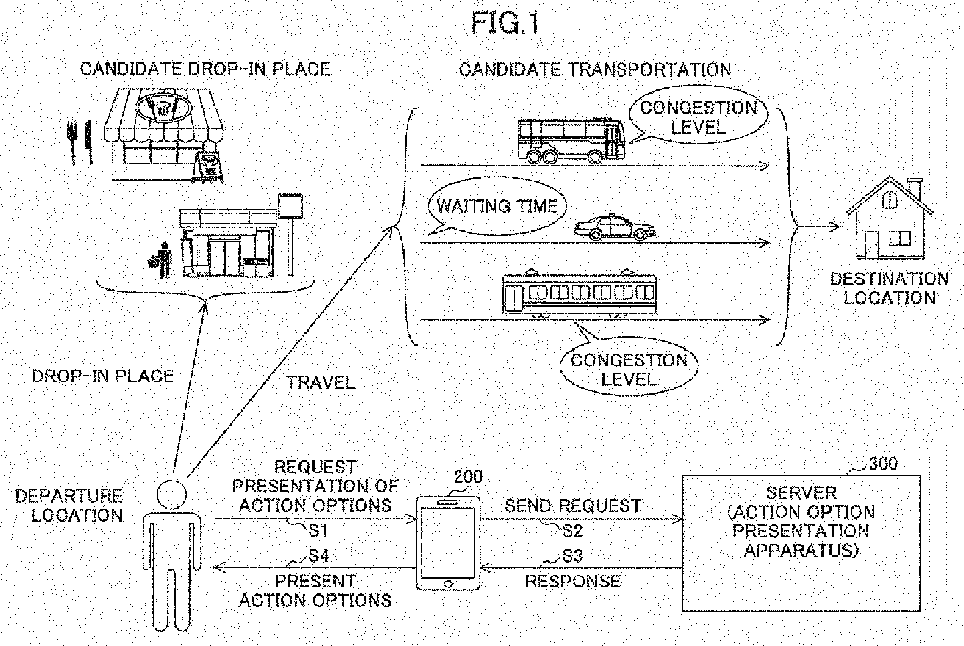

A first embodiment will be described with reference to the drawings. FIG. 1 is a drawing illustrating presentation of action options.

An action option presentation system of the present embodiment presents, when a user travels from a departure location to a destination location, candidate routes combined with candidate drop-in places where the user can drop in during a waiting time before travel by transportation starts.

In candidate routes of the present embodiment, transportation used for travel, a time at which the travel starts, and a time required for the travel are specified. In the following description of the present embodiment, the above-described candidate routes combined with the candidate drop-in places are referred to as action options.

In the action option presentation system of the present embodiment, upon information on a departure location, a destination location, and a time being input and a route search request being made (step S1), a terminal device 200 sends the request to a server 300 (step S2).

In other words, the terminal device 200 transmits departure location information, destination location information, and time information on either a departure time or an arrival time to the server 300.

Further, the terminal device 200 may be configured such that an input of a departure location or a destination location may be omitted. When the input is omitted, the terminal device 200 may send predetermined departure location information or predetermined destination location information to the server 300. The predetermined departure location information may be location information indicating a current location of the terminal device 200 specified by the GPS (Global Positioning System) or Wi-Fi (wireless fidelity), for example. The predetermined destination location information may be location information indicating a location of the user's home previously registered as user data 315, for example.

The terminal device 200 receives the input of the departure time or the arrival time as a request condition, and may send information indicating the received time to the server 300. Also, when the input of the departure time or the arrival time is omitted, the terminal device 200 may send a current time as departure time information to the server 300.

In the present embodiment, in the terminal device 200, if an input of any of the departure location information, the destination location, and the time information on either the departure time or the arrival time is omitted, the omitted information may be determined by the server 300.

When the server 300 receives the request, the server 300 obtains route information indicating candidate routes from the departure location to the destination location via transportation. The transportation of the present embodiment includes public transportation systems such as trains and buses, vehicles including taxis and the like, bicycles, and walking. Further, the route information of the present embodiment at least includes names of transportation systems and departure locations and departure times of the transportation systems. Further, the route information may include icons indicating transportation systems, types of trains, and arrival times, for example.

For the respective candidate routes indicated by the route information, the server 300 obtains waiting times after the request for presentation is received and before travel starts, and also obtains candidate places where the user can drop in during the waiting time. The candidate places where the user can drop in are referred to as candidate drop-in places.

Further, the server 300 sends action options that are the candidate routes and candidate drop-in place combinations to the terminal device 200 (step S3).

The terminal device 200 displays the action options such that the candidate places at which to drop in can be presented to the user of the terminal device 200 for the respective routes (step S4).

Further, the server 300 may receive, as the departure location information, location information on a departure location such as a station, a bus stop, and an address of the current location and departure time information sent from the terminal device 200. Further, the server 300 may use, as the departure location information, location information of the terminal device 200 obtained by the GPS. Also, the server 300 may use, as the departure time information, a time at which the destination location information sent from the terminal device 20 is received.

Further, the server 300 can receive the destination location information (such as a station, a bus stop, an address of a destination location, and an arrival time) sent from the terminal device 200. Also, the server 300 receives either one of the departure time information and the arrival time information.

As described above, in the present embodiment, upon a route search request being received, action options in which respective candidate routes included in the route information are combined with candidate drop-in places are presented. Namely, according to the present embodiment, information indicating places where the user can drop in while waiting is presented.

Therefore, according to the present embodiment, it is possible to allow the user of the terminal device 200 to make effective use of a waiting time.

Further, the server 300 of the present embodiment obtains satisfaction levels with respect to action options, respectively, by using the waiting times and congestion levels of the respective candidate routes. In the action options, the respective candidate routes are combined with the candidate drop-in places. Further, the server 300 of the present embodiment displays the action options in order according to their satisfaction levels.

In the present embodiment, by displaying the action options in order according to their satisfaction levels on the terminal device 200, more preferable candidate drop-in places can be presented to the user of the terminal device 200.

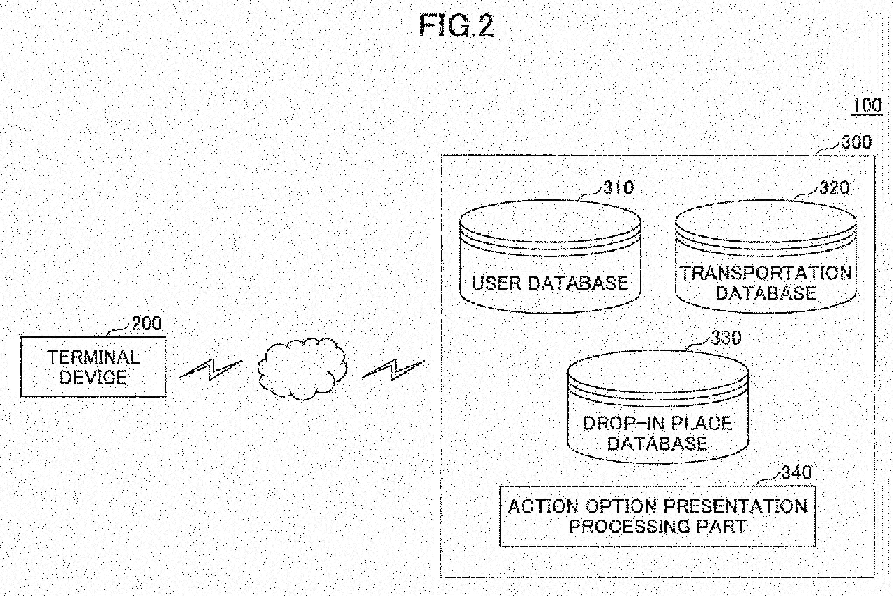

FIG. 2 is a drawing illustrating a system configuration of the action option presentation system of the first embodiment. The action option presentation system 100 of the present embodiment includes the terminal device 200 and the server 300. The terminal device 200 and the server 300 are coupled to each other via a network.

The terminal device 200 of the present embodiment sends a departure location, a destination location, and a route search request to the server 300. In the above-described present embodiment, a route search request is input to the terminal device 200 in order to present action options. However, a request for presenting action options may be input to the terminal device 200.

The server 300 of the present embodiment includes a user database 310, a transportation database 320, a drop-in place database 330, and an action option presentation processing part 340.

Upon receiving a route search request, the server 300 of the present embodiment causes the action option presentation processing part 340 to refer to the databases, generate a screen data for displaying action options, and send the screen data to the terminal device 200.

Therefore, the server 300 of the present embodiment serves as an action option presentation apparatus configured to present action options.

According to an example illustrated in FIG. 2, the server 300 includes the databases. However, the present invention is not limited thereto. An external apparatus that can communicate with the server 300 may be provided with the databases.

Also, in the example in FIG. 2, the server 300 includes the action option presentation processing part 340. However, the functions of the action option presentation processing part 340 may be implemented by a plurality of apparatuses that can communicate with the server 300.

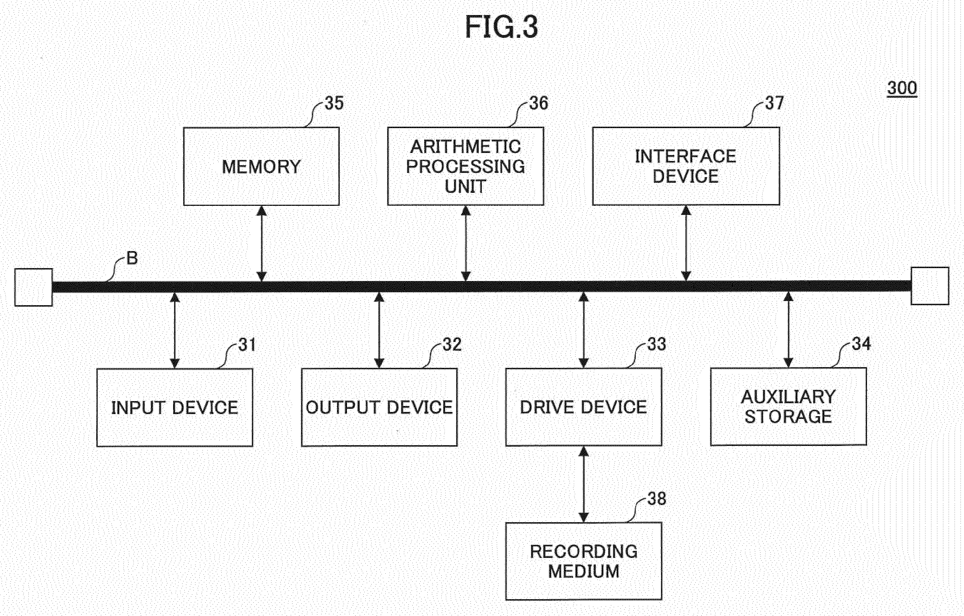

Referring to FIG. 3, a hardware configuration of the server 300 will be described below. FIG. 3 is a drawing illustrating the hardware configuration of the server of the first embodiment.

The server (action option presentation apparatus) 300 of the present embodiment includes an input device 31, an output device 32, a drive device 33, an auxiliary storage 34, a memory 35, an arithmetic processing unit 36, and an interface device 37, which are coupled to each other via a bus B.

The input device 31 is used to input various types of signals and display various types of information. The input device 31 may be a mouse or a keyboard, for example. The output device 32 is used to output various types of information. The output device 32 may be a display, for example.

The interface device 37 includes, for example, a modem and a LAN card, and is used to connect to a network. An action option presentation program is at least a part of various programs that control the server 300. The action option presentation program is, for example, distributed from a recording medium 38 or downloaded via a network. Examples of the recording medium 38 storing the action option presentation program include various types of recording mediums, including a recording medium that optically, electrically, or magnetically stores information such as a CD-ROM, a flexible disk, and a magneto-optical disc and including semiconductor memory that electrically stores information such as ROM and flash memory.

Further, when the recording medium 38 storing the action option presentation program is loaded into the drive device 33, the action option presentation program is installed from the recording medium 38 through the drive device 33 into the auxiliary storage 34. Also, when the action option presentation program is downloaded via the network, the action option presentation program is installed in the auxiliary storage 34 through the interface device 37.

The auxiliary storage 34 stores the installed action option presentation program and also stores required files and data, for example. At the startup of a computer, the memory 35 reads the action option presentation program from the auxiliary storage 34 and stores the action option presentation program. Further, the arithmetic processing unit 36 executes various types of processes according to the action option presentation program stored in the memory 35 as will be described later.

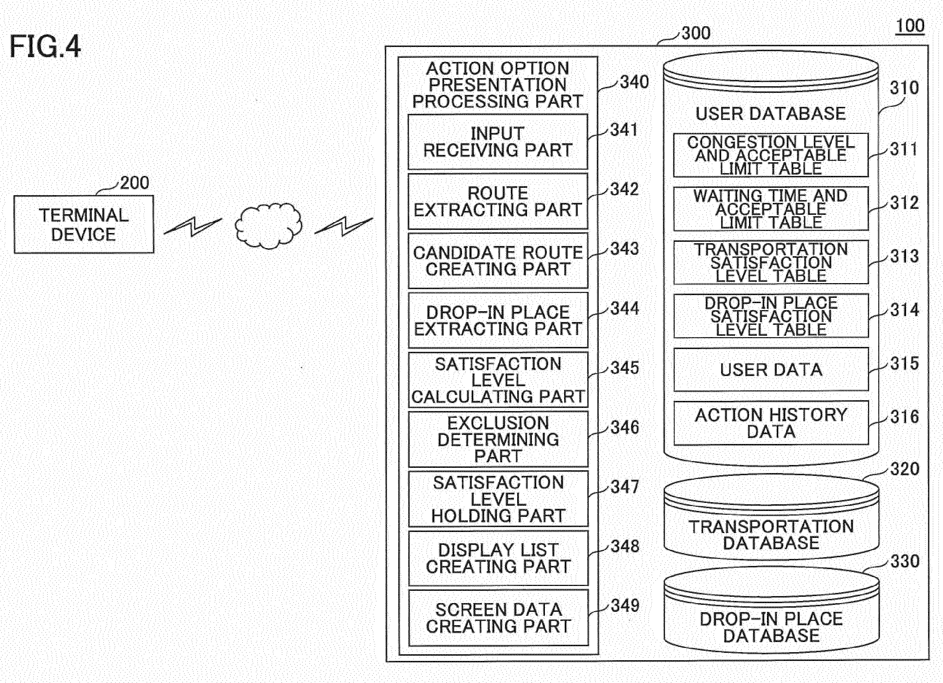

Next, referring to FIG. 4, a functional configuration of the server 300 of the present embodiment will be described. FIG. 4 is a drawing illustrating the functional configuration of the server of the first embodiment.

First, the databases included in the server 300 of the present embodiment will be described. The server 300 of the present embodiment includes the user database 310. The user database 310 of the present embodiment may be included in a predetermined storage space, for example, in the auxiliary storage 34 of the server 300.

The user database 310 of the present embodiment is provided for each user. The user database 310 of the present embodiment stores a congestion level and acceptable limit table 311, a waiting time and acceptable limit table 312, a transportation satisfaction level table 313, a drop-in place satisfaction level table 314, user data 315, and action history data 316. The tables included in the user database 310 will be described later in detail.

The user data 315 stored in the user database 310 is, for example, user information of the user associated with the user database 310. To be more specific, the user data 315 includes a user ID and an identifier for identifying the terminal device 200, for example.

The action history data 316 stored in the user database 310 is data indicating an action history of the user associated with the user database 310. To be more specific, the action history data 316 includes data indicating places where the user has dropped in and data indicating transportation systems that the user has used.

The transportation database 320 of the present embodiment includes a database used for a general route search and also includes information indicating congestion status of each route. The information indicating congestion status refers to congestion levels. The transportation database 320 will be described later in detail.

The drop-in place database 330 includes information on places as potential drop-in places. The drop-in place database 330 will be described later in detail.

Next, the action option presentation processing part 340 will be described. The action option presentation processing part 340 of the present embodiment includes an input receiving part 341, a route extracting part 342, a candidate route creating part 343, a drop-in place extracting part 344, a satisfaction level calculating part 345, an exclusion determining part 346, a satisfaction level holding part 347, a display list creating part 348, and a screen data creating part 349.

The input receiving part 341 receives the departure location, the destination location, and the request for presenting action options sent from the terminal device 200.

The route extracting part 342 refers to the transportation database 320 and extracts candidate routes from the departure location to the destination location. The candidate routes extracted by the route extracting part 342 each specify a transportation type, a time at which travel starts, and a time at which the travel ends. A plurality of candidate routes from a single departure location to a destination location at different departure times may be extracted.

The candidate route creating part 343 creates a list of the candidate routes in which each candidate route is associated with a waiting time before travel starts and a congestion level of the route.

The drop-in place extracting part 344 refers to the drop-in place database 330 and extracts candidate drop-in places that can be combined with the respective candidate routes. As a result, action options that associate the candidate routes with the candidate drop-in places, respectively, are created.

The satisfaction level calculating part 345 calculates satisfaction levels with respect to the respective action options by using the congestion levels and waiting times. A process of calculating satisfaction levels by the satisfaction level calculating part 345 will be described later in detail.

The exclusion determining part 346 determines whether each of the satisfaction levels is less than a predetermined threshold. The exclusion determining part 346 excludes an action option whose satisfaction level is less than the threshold from being presented.

The satisfaction level holding part 347 retains the satisfaction levels with respect to the respective action options.

The display list creating part 348 creates a list of action options displayed on the terminal device 200.

By using the list of action options created by the display list creating part 348, the screen data creating part 349 creates screen data for displaying the action options on the terminal device 200 and sends the screen data to the terminal device 200.

In the present embodiment, the server 300 includes the screen data creating part 349, but the present invention is not limited thereto. In the present embodiment, the terminal device 200 may include the screen data creating part 349. In such a case, the server 300 sends the list of action options created by the display list creating part 348 to the terminal device 200. Then, the screen data creating part 349 included in the terminal device 200 may create and display screen data for displaying the action options.

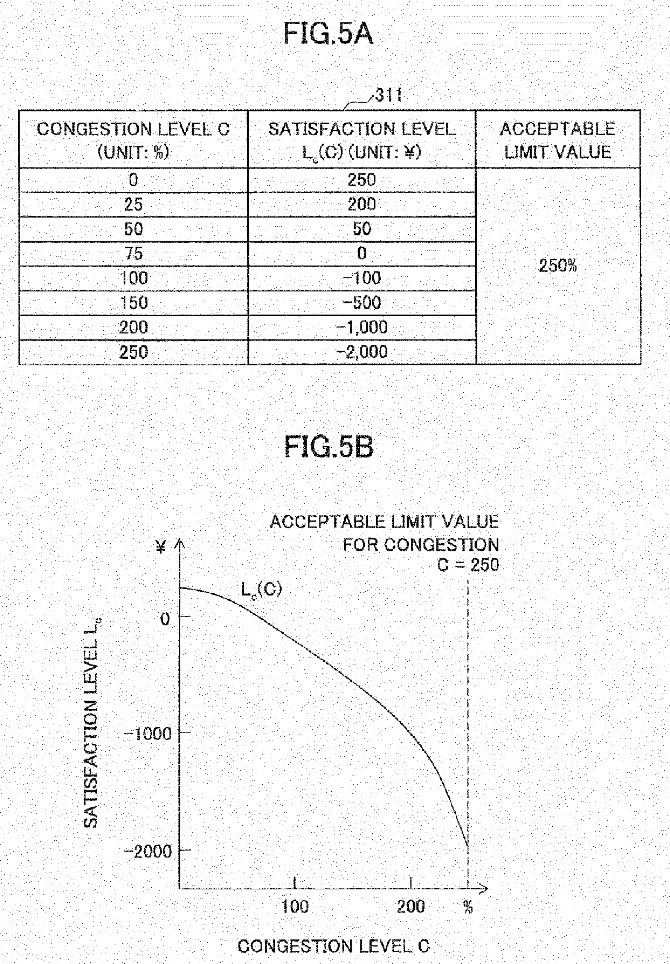

Referring to FIGS. 5 through FIG. 8, the tables stored in the user database 310 will be described below.

FIG. 5A is a drawing illustrating an example of the congestion level and acceptable limit table of the first embodiment. FIG. 5B is a drawing illustrating in a graph the congestion level and acceptable limit table of the first embodiment. The congestion level and acceptable limit table 311 is a table provided for each user.

The congestion level and acceptable limit table 311 of the present embodiment includes, as information items, a congestion level [%], a satisfaction level [yen], and an acceptable limit value [%].

In the congestion level and acceptable limit table 311, satisfaction levels are each associated with a congestion level. The item "congestion level C" represents a congestion level C converted into a numerical value expressed as a percentage (%). The item "satisfaction level" represents a satisfaction level with respect to a congestion level. The satisfaction level with respect to the congestion level is expressed as a value $L_c(C)$ that is converted into a monetary value. The values of the item "satisfaction level" of the present embodiment may be preliminarily set by the user.

Further, the item "acceptable limit value" represents an acceptable limit on congestion beyond which the user cannot accept congestion. In an example of FIG. 5A, the congestion level of 250% is the acceptable limit value.

The satisfaction level $L_c(C)$ is a function of the congestion level C. The relationship between the congestion level C and the satisfaction level $L_c(C)$ is illustrated in the graph of FIG. 5B. A horizontal axis represents the congestion level C and a vertical axis represents the satisfaction level $L_c$. As seen from FIG. 5B, the satisfaction level $L_c$ decreases as the congestion level C increases.

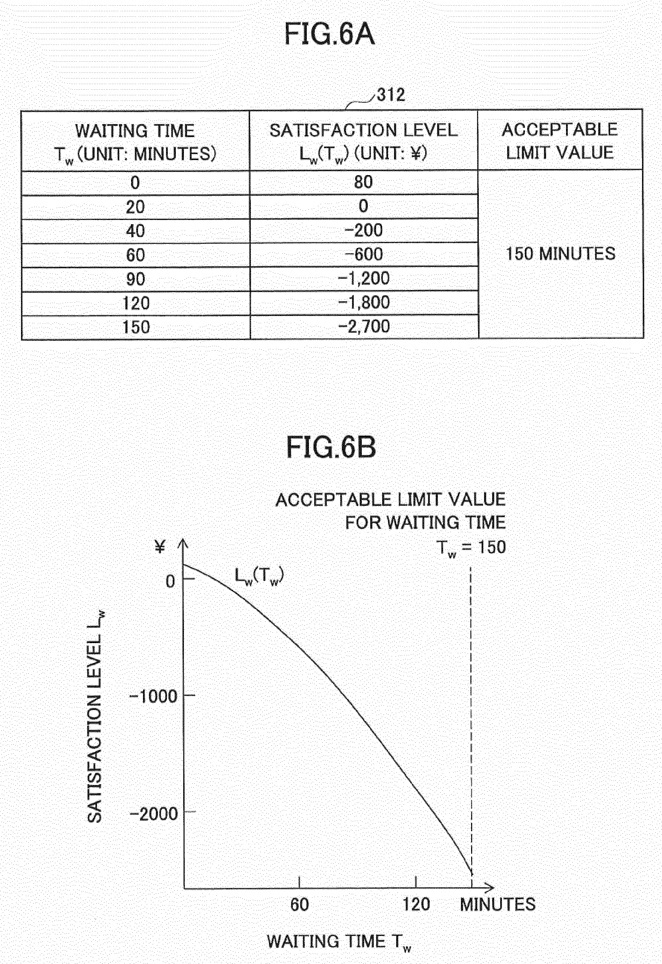

FIG. 6A is a drawing illustrating an example of the waiting time and acceptable limit table of the first embodiment. FIG. 6B is a drawing illustrating in a graph the waiting time and acceptable limit table of the first embodiment.

The waiting time and acceptable limit table 312 of the present embodiment includes, as information items, a waiting time [minutes], a satisfaction level [yen], and an acceptable limit value [minutes].

In the waiting time and acceptable limit table 312, waiting times are each associated with a satisfaction level. The item "waiting time" represents a waiting time $T_w$ converted into a numerical value expressed as minutes. The item "satisfaction level" represents a satisfaction level with respect to a waiting time. The satisfaction level with respect to the waiting time is expressed as a value $L_w(T_w)$ that is converted into a monetary value. The values of the item "satisfaction level" of the present embodiment may be preliminarily set by the user.

Further, the item "acceptable limit value" represents an acceptable limit on waiting time beyond which the user cannot accept waiting. In an example of FIG. 6A, the waiting time of 150 minutes is the acceptable limit value.

Now, the reason why an acceptable limit can be defined by satisfaction levels that are converted into monetary values will be described. For example, in a case where a satisfaction level of option A is 0 yen and a satisfaction level of option B is -1,000 yen, this means that option B is harder to be accepted by the user than option A because option B costs a monetary value of 1,000 yen more. In other words, if the user were to receive compensation of 1,000 yen by choosing option B over option A, a negative satisfaction level of option B would be offset, allowing the user to accept option B as the same satisfaction level as option A. This is the reason why the acceptable limit can be defined by the satisfaction levels converted into monetary values.

The satisfaction level $L_w(T_w)$ is a function of the waiting time $T_w$. The relationship between the waiting time $T_w$

and the satisfaction level $L_w(T_w)$ is illustrated in the graph of FIG. 6B. A horizontal axis represents the waiting time $T_w$ and a vertical axis represents the satisfaction level $L_w(T_w)$. As seen from FIG. 6B, the satisfaction level $L_w(T_w)$ decreases as the waiting time $T_w$ increases.

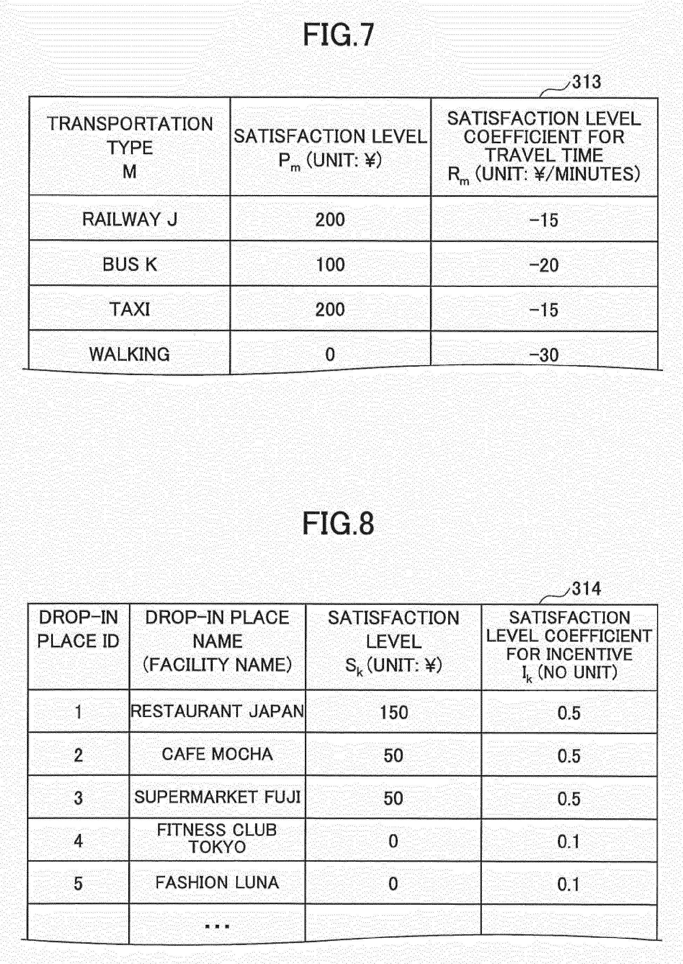

FIG. 7 is a drawing illustrating an example of a transportation satisfaction level table of the first embodiment. The transportation satisfaction level table 313 of the present embodiment includes, as information items, a transportation type, a satisfaction level, and a satisfaction level coefficient for travel time.

The item "transportation type M" represents transportation. The item "satisfaction level" represents a satisfaction level with respect to a transportation type. The satisfaction level with respect to the transportation type is expressed as a value Pm that is converted into a monetary value. The item "satisfaction level coefficient for travel time" represents a coefficient Rm that defines a satisfaction level with respect to travel time.

In the present embodiment, the satisfaction level Pm with respect to the transportation type and the satisfaction level coefficient Rm for the travel time are values that depend on the user's preference and are different for each transportation type. The satisfaction level Pm and the satisfaction level coefficient Rm for the travel time may be set by the user according to the user's own preference.

For example, FIG. 7 illustrates an example in which satisfaction levels when the user takes railway J and when the user takes a taxi are higher than a satisfaction level for bus K. Therefore, it can be seen that the user prefers traveling by railway J or by taxi to traveling by bus K.

FIG. 8 is a drawing illustrating an example of a drop-in place satisfaction level table of the first embodiment. The drop-in place satisfaction level table 314 of the present embodiment includes, as information items, a drop-in place ID, a drop-in place name, a satisfaction level, a satisfaction level coefficient for incentive.

The item "drop-in place ID" represents an identifier for identifying a drop-in place. The item "drop-in place name" represents a name of the drop-in place identified by the drop-in place ID. The item "satisfaction level" represents a satisfaction level with respect to the drop-in place. The satisfaction level of the user with respect to the drop-in place is represented by a value $S_k$ that is converted into a monetary value. The item "satisfaction level coefficient for incentive" represents a coefficient $I_k$ that defines how much an incentive such as a coupon having a monetary value contributes to a satisfaction level of the user when the incentive is given to the user.

In an example of FIG. 8, a satisfaction level of the drop-in place "Restaurant Japan" identified by the drop-in place ID 1 is 150. A satisfaction level of the drop-in place "Cafe Mocha" identified by the drop-in place ID 2 is 50. Therefore, it can be seen that the user prefers dropping in at Restaurant Japan to dropping in at Cafe Mocha.

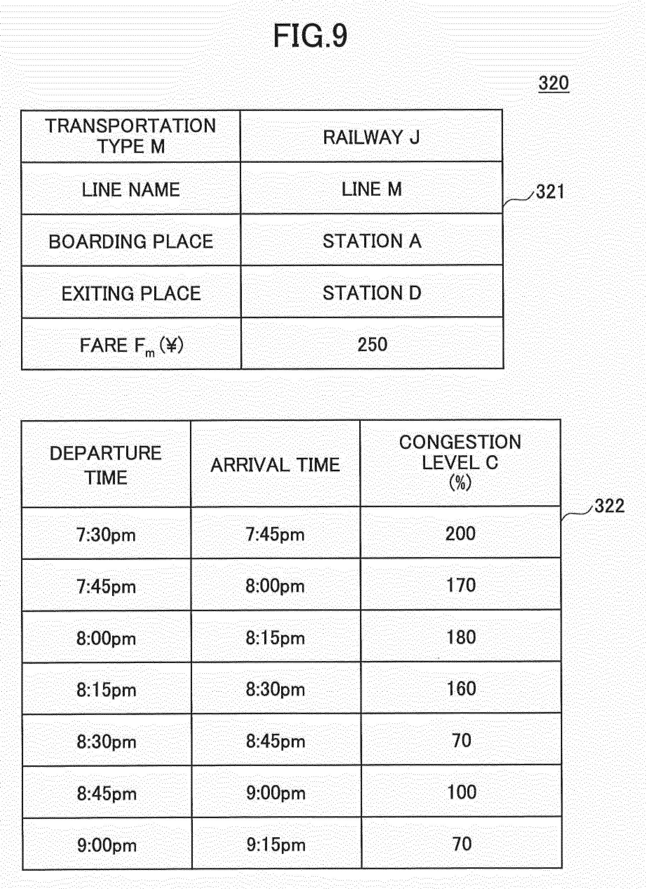

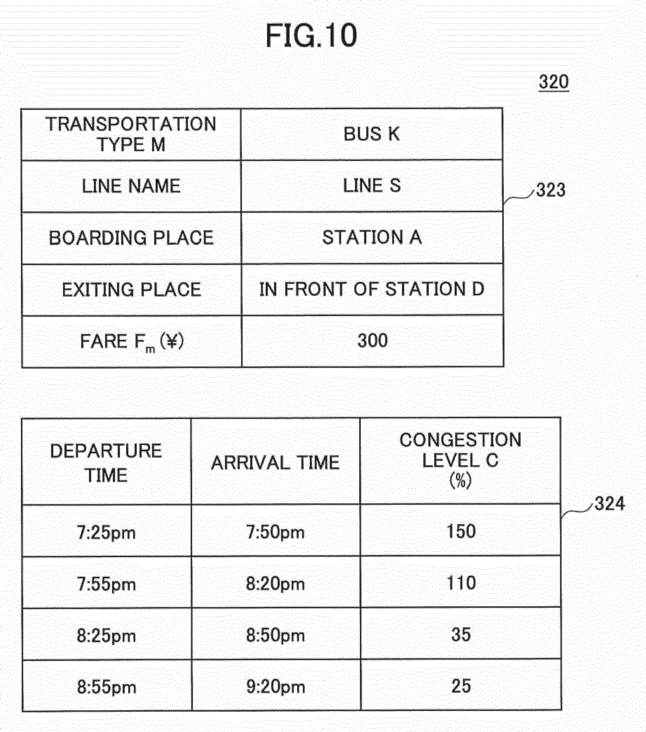

Next, referring to FIG. 9 and FIG. 10, the transportation database 320 of the present embodiment will be described. FIG. 9 is a first drawing illustrating the transportation database of the first embodiment.

The transportation database 320 of the present embodiment stores a table indicating congestion levels of respective routes. The routes are searched from a database used for a general route search. The transportation database 320 of the present embodiment may include such a database used for a general route search.

A table 321 illustrated in FIG. 9 is an example of a table indicating a route obtained by the route search. The route in the table 321 indicates that the transportation type M is railway J and the fare $F_m$ from station A (boarding place) to station D (exiting place) using line M is 250 yen.

Further, a table 322 indicates departure and arrival times of trains operated on the route indicated in the table 321 and also indicates congestion levels of the trains.

In the table 322, the congestion level C of a train operated on line M of railway J and departing at 7:30 p.m. and arriving at 7:45 p.m. is 200%. The congestion level C of a train operated on line M of railway J and departing at 8:30 p.m. and arriving at 8:45 p.m. is 70%. Therefore, for line M of railway J, the train departing at 8:30 p.m. is less crowded than the train departing at 7:45 p.m.

In the tables stored in the user database 310 of the present embodiment, the values of the items that are preliminarily set by the user may be changed according to, for example, the weather and temperature.

FIG. 10 is a second drawing illustrating the transportation database of the first embodiment. A table 323 illustrated in FIG. 10 is an example of a table indicating a route obtained by the route search. The route in the table 323 indicates that the transportation type M is bus K and the fare Fm from station A (boarding place) to station D (exiting place) using line S is 300 yen.

Further, a table 324 indicates departure and arrival times of bus services operated on the route indicated by the table 323 and also indicates congestion levels of the bus services.

In the table 324, the congestion level C of a bus service operated on line S of bus K and departing at 7:25 p.m. and arriving at 7:50 p.m. is 150%. The congestion level C of a bus service operated on line S of bus K and departing at 8:25 p.m. and arriving at 8:50 p.m. is 35%. Therefore, for line S of bus K, the bus service departing at 8:25 p.m. is less crowded than the bus service departing at 7:25 p.m.

As illustrated in tables 321 through 324, the transportation database 320 of the present embodiment may comprehensively hold tables that associate respective routes with congestion levels with respect to each transportation type, each operating section, and each operating time schedule of a train and a bus service.

Further, in a case where a departure location, a destination location, and a desired time such as a departure time and an arrival time are provided, tables that associate respective routes with congestion levels and are stored in the transportation database 320 of the present embodiment may be created by searching an external database that associate respective routes with congestion levels.

Congestion levels included in the transportation database 320 of the present embodiment may be changed according to, for example, the weather and temperature.

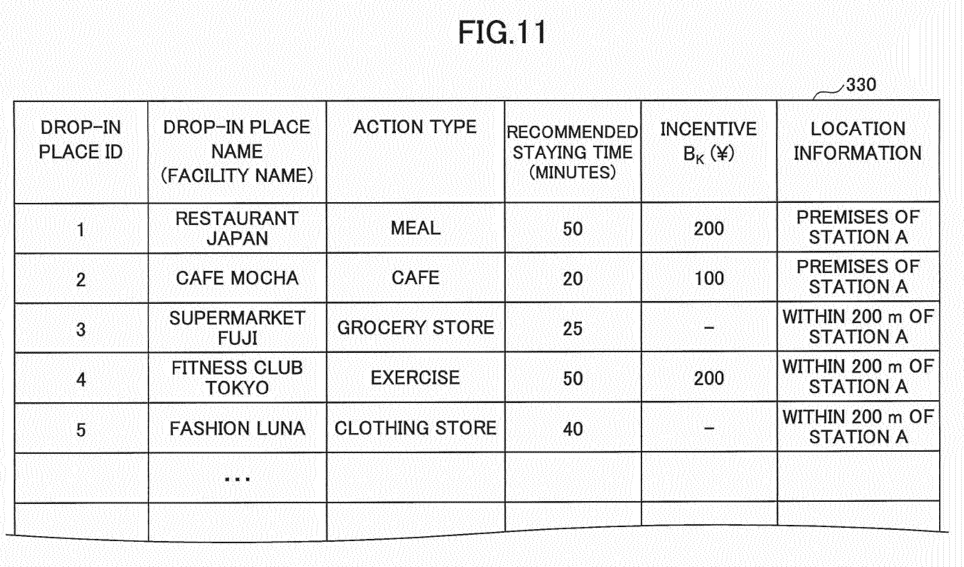

Next, referring to FIG. 11, the drop-in place database 330 will be described. FIG. 11 is a drawing illustrating an example of the drop-in place database of the first embodiment.

The drop-in place database 330 of the present embodiment includes, as information items, a drop-in place ID, a drop-in place name, an action type, a recommended staying time, an incentive, and location information.

The item "action type" represents a type of an action performed in a place identified by a drop-in place ID. The item "recommended staying time" represents a recommended staying time at the place identified by the drop-in place ID.

The item "incentive" represents a value $B_k$ of an incentive such as a coupon that is converted into a monetary value and is provided to the user at the place specified by the drop-in place ID. The item "location information" represents a location of the place identified by the drop-in place ID.

Recommended staying times and incentives included in the drop-in place database 330 of the present embodiment may be changed according to, for example, the weather and temperature.

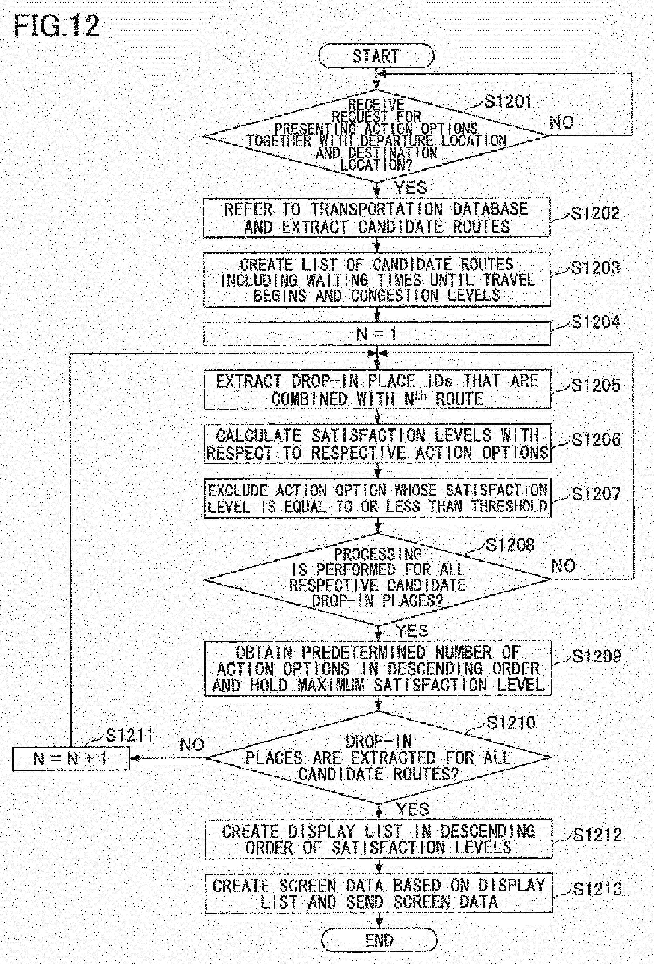

Next, referring to FIG. 12, an operation of the server 300 of the present embodiment will be described. FIG. 12 is a flowchart illustrating the operation of the server of the first embodiment.

The action option presentation processing part 340 of the server 300 of the present embodiment determines whether the input receiving part 341 receives a request for presenting action options together with a departure location and a destination location (step S1201). In step S1201, in a case where the request for presentation is not received, the server 300 waits until the request for presentation is received.

In a case where the request for presentation is received in step S1201, the action option presentation processing part 340 causes the route extracting part 342 to refer to the transportation database 320 and extract candidate routes from the departure location to the destination location (step S1202).

Next, the action option presentation processing part 340 causes the candidate route creating part 343 to refer to the transportation database 320 and create a list of candidate routes (step S1203). In the list of candidate routes, the extracted respective candidate routes are associated with waiting times, after the request for presentation is received and before travel starts, and are also associated with congestion levels. The server may use the current time instead of using time when the request for presentation is received. The list of candidates may be temporarily held in a working storage space of the server 300. The list of candidates will be described later in detail.

Next, the action option presentation processing part 340 sets a variable N to 1 (step S1204) . Next, the action option presentation processing part 340 causes the drop-in place extracting part 344 to refer to the drop-in place database 330 and extract drop-in places that are combined with the $N^{th}$ route of the list of candidate routes (step S1205).

To be more specific, the drop-in place extracting part 344 extracts, as candidate drop-in places, drop-in places that have shorter recommended staying times than the waiting time of the $N^{th}$ route of the list of candidate routes.

Next, the action option presentation processing part 340 causes the satisfaction level calculating part 345 to calculate satisfaction levels with respect to respective action options that associate the $N^{th}$ route with the respective candidate drop-in places (step S1206).

Now, a process of calculating a satisfaction level with respect to an action option by the satisfaction level calculating part 345 of the present embodiment will be described.

In the present embodiment, a satisfaction level with respect to an action option is calculated by using the following formula (1):

$$\text{(Formula 1)}$$
$$V = L_c(C) + L_w(T_w) - F_m + P_m + R_m \times T_m + S_k + I_k \times B_k + A$$

In the formula (1), V represents a satisfaction level with respect to an action option, $L_c(C)$ represents a satisfaction level with respect to congestion, $L_w(T_w)$ represents a satisfaction level with respect to a waiting time, and $F_m$ represents a fare required for travel time of transportation. Also, in the formula (1), $P_m$ is a satisfaction level with respect to the transportation type, $R_m$ is a satisfaction level coefficient for travel time of the transportation type, and $T_m$ represents the travel time. Further, in the formula (1), $_k$ represents a drop-in place ID, $S_k$ represents a satisfaction level with respect to a drop-in place, $I_k$ represents a satisfaction level coefficient for an incentive given to the drop-in place, $B_k$ is a value that represents the incentive converted into a monetary value, and A is an adjustment constant.

The adjustment constant A of the present embodiment is a constant that is adjusted such that the satisfaction level V with respect to the action option becomes a positive value. By using the adjustment constant, the satisfaction level V with respect to the action option becomes a positive value that is intuitively understandable.

By using the formula (1), the satisfaction level calculating part 345 of the present embodiment calculates the satisfaction level V with respect to the action option that associates the candidate route with the candidate drop-in places extracted in step S1205.

Next, the action option presentation processing part 340 causes the exclusion determining part 346 to determine whether the calculated satisfaction level V is equal to or greater than a predetermined threshold. When the satisfaction level V is equal to or less than the threshold, this action option is excluded from action options presented (step S1207).

Next, the action option presentation processing part 340 determines whether satisfaction levels are calculated for all the respective candidate drop-in places (step S1208). In S1208, if there are still extractable candidate drop-in places, the action option presentation processing part 340 returns to step S1205.

In step S1208, once all the extractable candidate drop-in places are processed, the action option presentation processing part 340 causes the satisfaction level holding part 347 to obtain a predetermined number of action options in descending order according to their satisfaction levels V and hold the maximum value of the satisfaction levels V (step S1209).

Next, the action option presentation processing part 340 determines whether the processing from step S1205 through step S1209 is executed for all the candidate routes extracted in S1202 (step S1210). In step S1210, when the processing is determined not to be executed for all the candidate routes, the action option presentation processing part 340 sets the variable N to N + 1 (step S1211) and returns to step S1205.

In step S1210, when the action option presentation processing part 340 determines that the processing is executed for all the candidate routes, the action option presentation processing part 340 causes the display list creating part 348 to create a display list (step S1212). In the display list, the action options having the same route ID are grouped together, and groups of action options are arranged in descending order of maximum values of the satisfaction levels V. Also, in the respective groups, action options are arranged in descending order of satisfaction levels V. For example, the display list is temporarily stored in the working storage space of the server 300. The details of the display list will be described later. Next, the action option presentation processing part 340 causes the screen data creating part 349 to create screen data for displaying the action options based on the display list and to send the screen data to the terminal device 200 (step S1213). The processing ends.

In a case where the terminal device 200 is provided with the screen data creating part 349, the server 300 sends the display list of the action options created by the display list creating part 348 to the terminal device 200 in step S1213, and ends the processing.

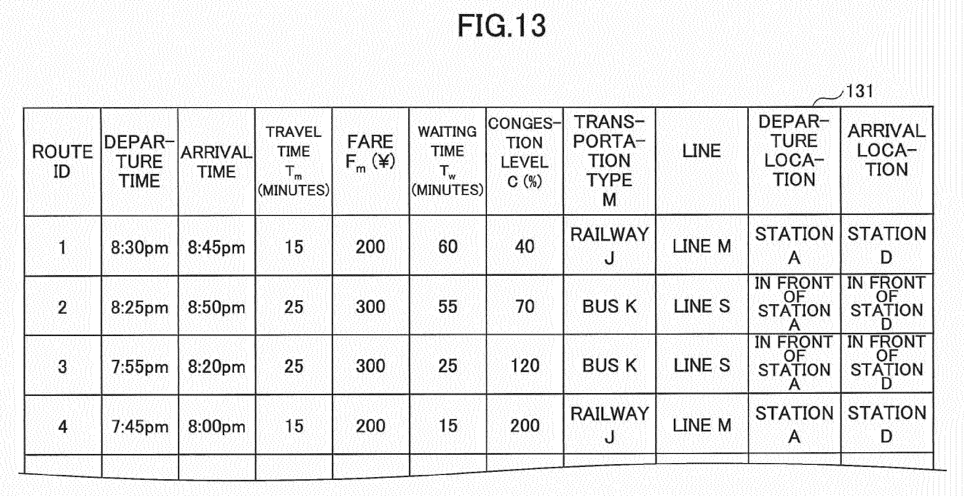

Referring to FIG. 13, the list of candidates will be described. FIG. 13 is a drawing illustrating an example of the list of candidates of the first embodiment.

A list of candidates 131 illustrated in FIG. 13 includes, as information items, a route ID, a departure time, an arrival time, a travel time, a fare, a waiting time, a congestion level, a transportation type, a line, a departure location, and an arrival location. Further, in addition to the above-described items, the list of candidates 131 may include transfer information.

The item "route ID" represents an identifier for identifying a candidate route extracted by the route extracting part 342. The item "departure time" represents a time when travel by transportation starts, namely, a time when the transportation departs from a departure location. The item "arrival time" represents a time when the transportation arrives at a destination location.

The item "travel time" represents a period of time $T_m$ from a departure time to an arrival time. The item "fare" represents a fare $F_m$ (transportation fee) of the transportation. The item "waiting time" represents a time $T_w$ from a request for presenting action options being received until the departure time. The item "congestion level" represents a congestion level C with respect to the route associated with the departure time and the arrival time.

A process of creating the list of candidates 131 will be described below in detail.

The list of candidates 131 is a list of candidates created in a case where the input receiving part 341 receives inputs of a departure location "station A" and a destination location "station D" and the route extracting part 342 extracts four routes ranging from a route ID 1 to a route ID 4.

For the route ID 1 of the list of candidates 131, the transportation type is railway J, the line is line M, the departure time is 8:30 p.m., and the arrival time is 8:45 p.m. Also, in the example of FIG. 13, the request for presenting action options is assumed to be received at 7:30 p.m.

In this case, the candidate route creating part 343 sets the travel time $T_m$ to 15 minutes from the departure time 8:30 p.m. to the arrival time 8:45 p.m. Also, the candidate route creating part 343 sets the waiting time $T_w$ to 60 minutes, from 7:30 p.m., at which time the request for presenting action options is received, to the departure time 8:30 p.m.

Further, the candidate route creating part 343 refers to the transportation database 320, obtains a congestion level of a train operated on line M of railway J and departing at 8:30 p.m. and arriving at 8:45 p.m., and sets the obtained congestion level as a congestion level C.

In the way described above, the candidate route creating part 343 of the present embodiment creates the list of candidates 131 that includes congestion levels C and waiting times Tw of the respective candidate routes.

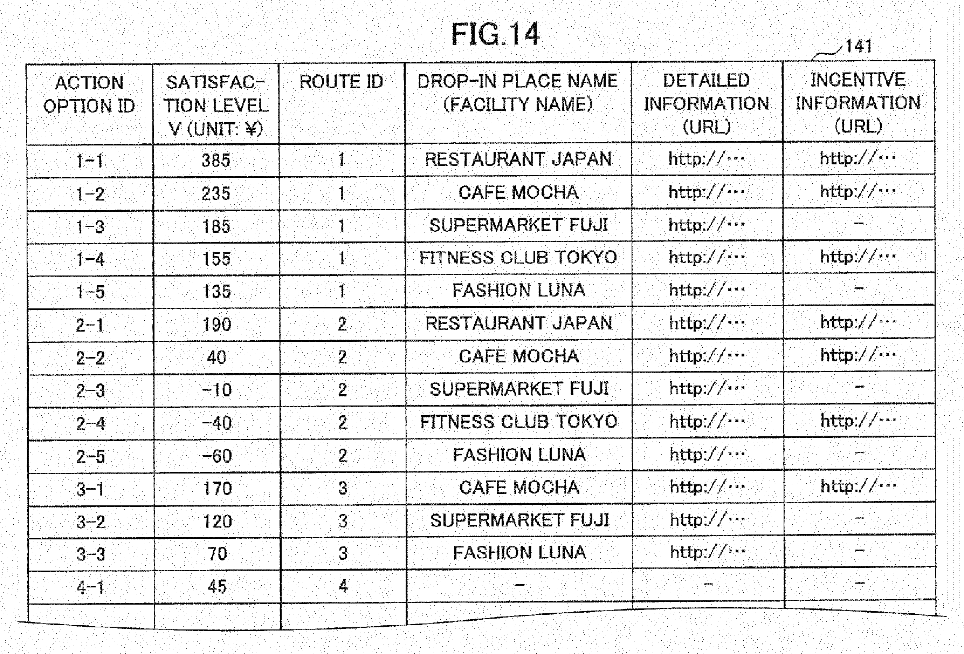

Next, referring to FIG. 14, the display list created by the display list creating part 348 will be described. FIG. 14 is a drawing illustrating an example of the display list of the first embodiment.

A display list 141 illustrated in FIG. 14 includes, as information items, an action option ID, a satisfaction level, a route ID, a drop-in place name, detailed information, and incentive information.

The item "action option ID" represents an identifier for identifying an action option. The action option ID of the present embodiment includes a route ID and a drop-in place ID. To be more specific, the route ID and the drop-in place ID included in the action option ID of the present embodiment are connected with a hyphen [-].

The item "satisfaction level" represents a satisfaction level V with respect to the action option calculated by the satisfaction level calculating part 345. The item "detailed information" represents a URL for displaying detailed information about an associated drop-in place on the terminal device 200. The item "incentive information" represents a URL for displaying incentives such as coupons for the associated drop-in place on the terminal device 200.

A process of creating the display list 141 will be described below in detail.

First, the drop-in place extracting part 344 of the present embodiment extracts drop-in place IDs as potential drop-in places for a candidate route identified by the route ID 1 of the list of candidates 131. The route ID 1 has a waiting time of 60 minutes. Therefore, by referring to the drop-in place database 330, the drop-in place extracting part 344 extracts the drop-in place ID 1 having a recommended staying time of 50 minutes, which is shorter than 60 minutes.

Next, the satisfaction level calculating part 345 obtains, by referring to the list of candidates 131, the travel time $T_m$, the waiting time $T_w$, the fare $F_m$, the congestion level C, and the transportation type M associated with the route ID 1. Further, the satisfaction level calculating part 345 obtains, by referring to the drop-in place database 330, the incentive $B_k$ given to the drop-in place ID 1.

Moreover, the satisfaction level calculating part 345 obtains, by referring to the congestion level and acceptable limit table 311 of the user database 310, a satisfaction level $L_c(C)$ associated with the congestion level C. Also, the satisfaction level calculating part 345 obtains, by referring to the waiting time and acceptable limit table 312, a satisfaction level $L_w(T_w)$ associated with the waiting time $T_w$. Further, the satisfaction level calculating part 345 obtains, by referring to the transportation satisfaction level table 313, a satisfaction level $P_m$ and a satisfaction level coefficient $R_m$ for travel time with respect to the transportation type M. Further, by referring to the drop-in place satisfaction level table 314, the satisfaction level calculating part 345 obtains a satisfaction level $S_k$ and a satisfaction level coefficient $I_k$ for incentive with respect to the drop-in place ID 1.

The satisfaction level calculating part 345 calculates a satisfaction level V using the formula (1). This satisfaction level V is a satisfaction level with respect to an action option ID 1-1 that associates the route ID 1 with the drop-in place ID 1. At this time, the exclusion determining part 346 excludes an action option ID whose satisfaction level V is equal to or less than the predetermined threshold from being stored in the display list.

In the example of FIG. 14, drop-in place IDs 2, 3, 4, and 5 also have shorter recommended staying times than the waiting time of the route ID 1. Therefore, the satisfaction level calculating part 345 calculates satisfaction levels V with respect to the action option IDs 1-2, 1-3, 1-4, and 1-5, respectively.

Further, the display list creating part 348 obtains a predetermined number of action option IDs associated with a route ID in descending order of their satisfaction levels V. In the present embodiment, the predetermined number is 5. Therefore, the display list creating part 348 obtains the five action option IDs 1-1, 1-2, 1-3, 1-4, and 1-5 in descending order of their satisfaction levels V.

Namely, the satisfaction level holding part 347 retains the maximum values of the satisfaction levels V for respective route IDs.

In the way described above, for the respective route IDs included in the list of candidates 131, the action option presentation processing part 340 of the present embodiment calculates satisfaction levels V with respect to action options that associate the respective route IDs with drop-in place IDs.

Further, the display list creating part 348 obtains route IDs in descending order of the maximum values of the satisfaction levels V. Subsequently, the display list creating part 348 stores, in the display list 141, action option IDs included in each of the obtained route IDs in descending order of the satisfaction levels V.

When the display list creating part 348 stores, in the display list 141, an action option ID included in a route ID, the display list creating part 348 associates the action option ID with a satisfaction level V, the route ID, a drop-in place name, detailed information, and incentive information, respectively.

In the example of FIG. 14, the maximum value of the satisfaction level V associated with the route ID 1 is 385. The maximum value of the satisfaction level V associated with the route ID 2 is 190. The maximum value of the satisfaction level V associated with the route ID 3 is 170.

Therefore, the display list creating part 348 first stores action option IDs associated with the route ID 1 in the display list 141 in descending order of their satisfaction levels V. Next, the display list creating part 348 stores action option IDs associated with the route ID 2 in the display list 141 in descending order of their satisfaction levels V. Third, the display list creating part 348 stores action option IDs associated with the route ID 3 in the display list 141 in descending order of their satisfaction levels V.

Upon the display list 141 being created, the screen data creating part 349 of the present embodiment refers to the display list 141, creates screen data for displaying the action options on a screen of the terminal device 200, and sends the screen data to the terminal device 200.

In a case where the terminal device 200 is provided with the screen data creating part 349, the server 300 sends the display list of the action options created by the display list creating part 348 to the terminal device 200.

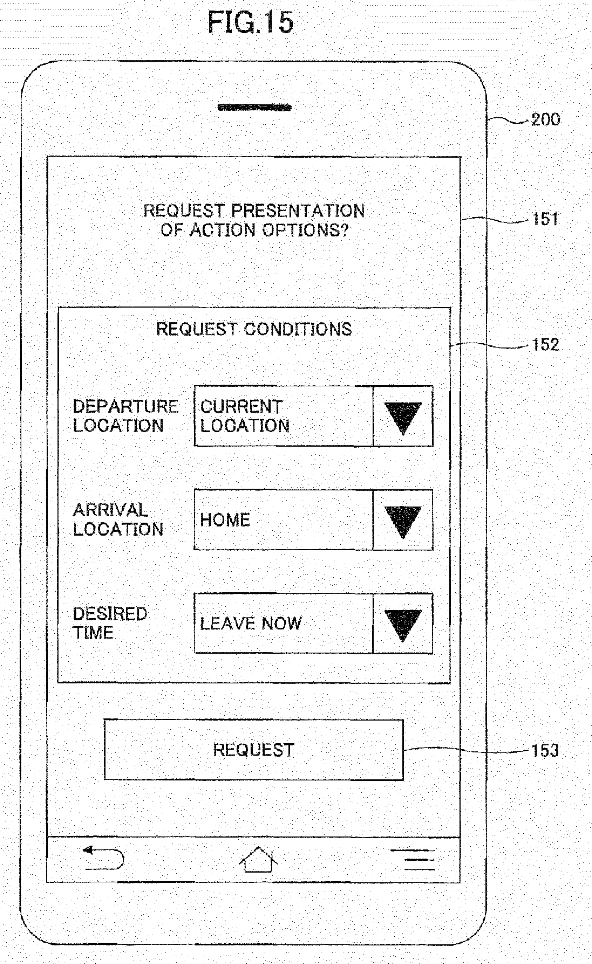

Referring to FIG. 15 through FIG. 17, a screen displayed on the terminal device 200 will be described below.

FIG. 15 is a drawing illustrating an example of an input screen displayed on the terminal device. In FIG. 15, an input screen 151 displayed on the terminal device 200 is illustrated. The input screen 151 includes an input field 152 in which a departure location, a destination location, and a desired time are input, and includes a button 153 for requesting the presentation of action options.

Once a departure location, a destination location, and a time are input in the input field 152, and the button 153 is operated, the terminal device 200 of the present embodiment sends the request for presentation together with the departure location, the destination location, and the desired time to the server 300.

In the present embodiment, initial values of a departure location, a destination location, and a departure time may be preliminarily displayed in the input field 152. In FIG. 15, as initial values of the departure location, the destination location, and the departure time, a "current location," a "home," and "leave now" are displayed. In a case where the user of the terminal device 200 uses the initial values to request the presentation, the user may just operate the button 153. In a case where the user changes the initial values, the user may make changes in the input field 152 and may operate the button 153. Further, a departure time is not necessarily specified as a desired time and an arrival time may be specified.

Moreover, in the example of FIG. 15, "leave now" is input as a time. Therefore, the server 300 sets a period of time after the request for presentation is received and before travel by transportation starts as a waiting time Tw. A time before travel by transportation starts means a time after a route search request is received by the server 300 until travel starts in accordance with route information. Also, when the user transfers between a plurality of transportation steps, the time before travel by transportation starts is not limited to the time after the route search request is received and before travel by the first transportation starts. For example, the time before travel by transportation starts may be a time after travel by the first transportation ends and before travel by the second transportation starts.

Also, in the input field 152, when the departure time is set to a time that is one hour later, the waiting time Tw may be obtained by adding one hour to a waiting time after the request for presentation is received and before travel by transportation starts.

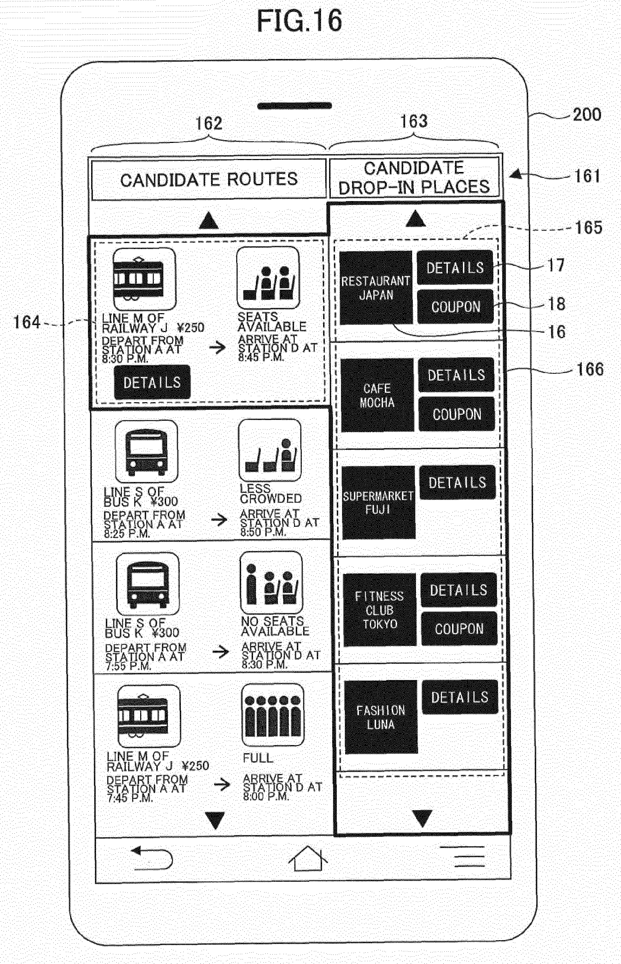

FIG. 16 is a first drawing illustrating an example in which a screen for presenting action options is displayed on the terminal device of the first embodiment. FIG. 16 illustrates a presentation screen 161 for displaying action options on the terminal device 200.

The presentation screen 161 includes a display field 162 and a display field 163. The display field 162 displays candidate routes and congestion levels C for the respective candidate routes.

The display field 163 displays candidate drop-in places for the route selected in the display field 162.

In the present embodiment, the candidate routes are displayed in the display field 162 in descending order from the route having the highest maximum satisfaction level V associated with the route ID. Therefore, among the candidate routes combined with the candidate drop-in places, the route having the highest satisfaction level V is a route 164.

Further, in the present embodiment, the candidate drop-in places are displayed in the display field 163 in descending order from the drop-in place having the highest satisfaction level V among the drop-in places combined with the selected route. Therefore, among the candidate drop-in places 165 displayed in the display field 163, the drop-in place having the highest satisfaction level V when combined with the route 164 is Restaurant Japan.

Moreover, when a Details button 17 displayed next to a Restaurant Japan icon 16 is operated, the terminal device 200 of the present embodiment may switch from the presentation screen 161 to a URL page displaying the detailed information corresponding to Restaurant Japan of the display list 141.

Further, in the present embodiment, when a Coupon button 18 is operated, the terminal device 200 may switch from the presentation screen 161 to a URL page displaying incentive information corresponding to Restaurant Japan of the display list 141.

Accordingly, when a route is selected in the display field 162 of the presentation screen 161 of the present embodiment, the drop-in places associated with the selected route are displayed in the display field 163. Therefore, in a display area 166 of the presentation screen 161, the candidate drop-in places associated with the selected route 164 are displayed.

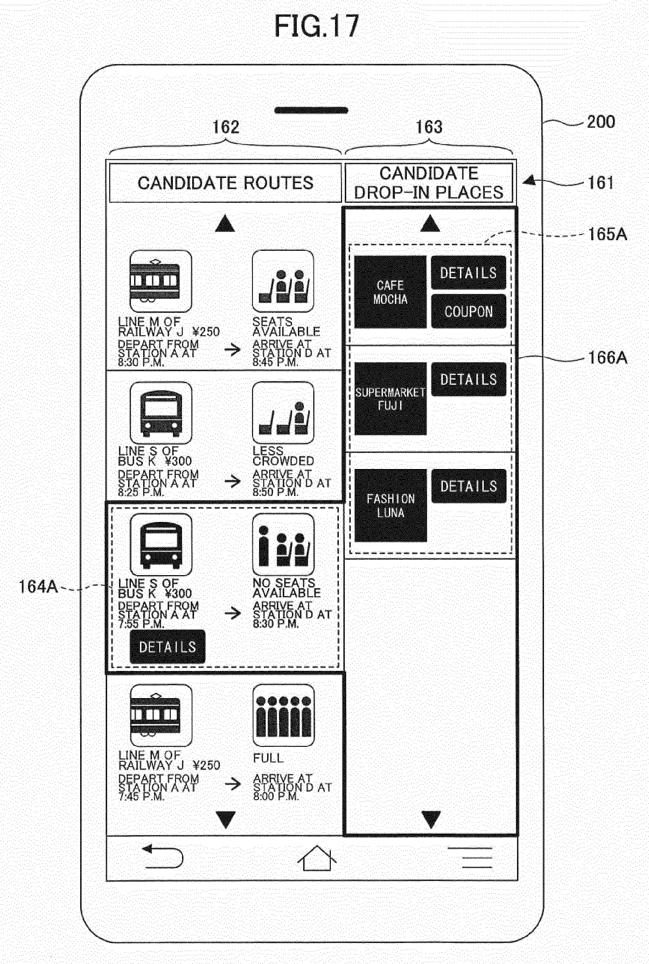

FIG. 17 is a second drawing illustrating an example in which the screen for presenting action options is displayed on the terminal device.

FIG. 17 illustrates a case in which a route 164A is selected in the display field 162 of the presentation screen 161. In this case, candidate drop-in places 165A associated with the route 164A are displayed in the display field 163.

In this case, at the top of the display field 163, Cafe Mocha is displayed as a drop-in place. Accordingly, the drop-in place having the highest satisfaction level V when combined with the route 164A is Cafe Mocha.

In this way, when the route 164A is selected in the display field 162, the display field 163 switches the display contents to drop-in places associated with the route 164A. In the display area 166A, the candidate drop-in places associated with the selected route 164A are displayed.

According to the present embodiment, when a route is selected, action options that combine the route with the associated drop-in places are displayed. Therefore, according to the present embodiment, it is possible to allow a user of the terminal device 200 to make effective use of a waiting time.

In other words, on the terminal device 200, a route is displayed in combination with candidate places where the user can drop in during a waiting time before travel starts in accordance with the route. This allows the user of the terminal device 200 to make effective use of the waiting time.

Further, according to the present embodiment, when candidate drop-in places are combined with a route, the candidate drop-in places are displayed in the display field 163 in descending order of their satisfaction levels. Therefore, according to the present embodiment, the drop-in places that are highly likely to satisfy the user of the terminal device 200 can be preferentially presented to the user.

Also, according to the present embodiment, it is possible to guide the user of the terminal device 200 to use a route having a low congestion level, allowing congestion to be reduced.

(Second Embodiment)

In the following, a second embodiment will be described with reference to the drawings. A difference from the first embodiment is that congestion levels are not displayed on a presentation screen of the terminal device 200. In the following description of the second embodiment, the difference from the first embodiment will be described. The elements having the same functions or configurations as those of the first embodiment are referred to by the same numerals, and a duplicate description thereof will be omitted.

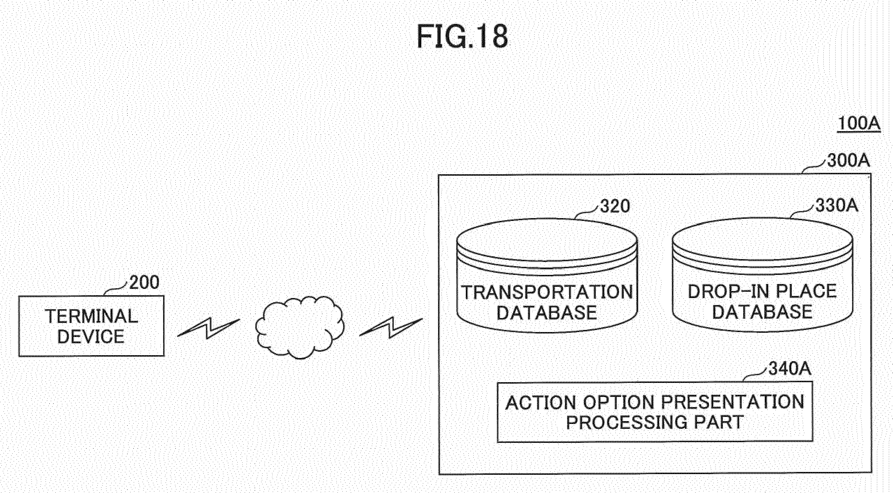

FIG. 18 is a drawing illustrating a system configuration of an action option presentation system of the second embodiment. An action option presentation system 100A of the present embodiment includes a server 300A.

The server 300A of the present embodiment includes a transportation database 320, a drop-in place database 330A, and an action option presentation processing part 340A.

In the server 300A of the present embodiment, a congestion level and a satisfaction level are not used. Action options according to waiting times and recommended staying times of drop-in places are displayed on the terminal device 200.

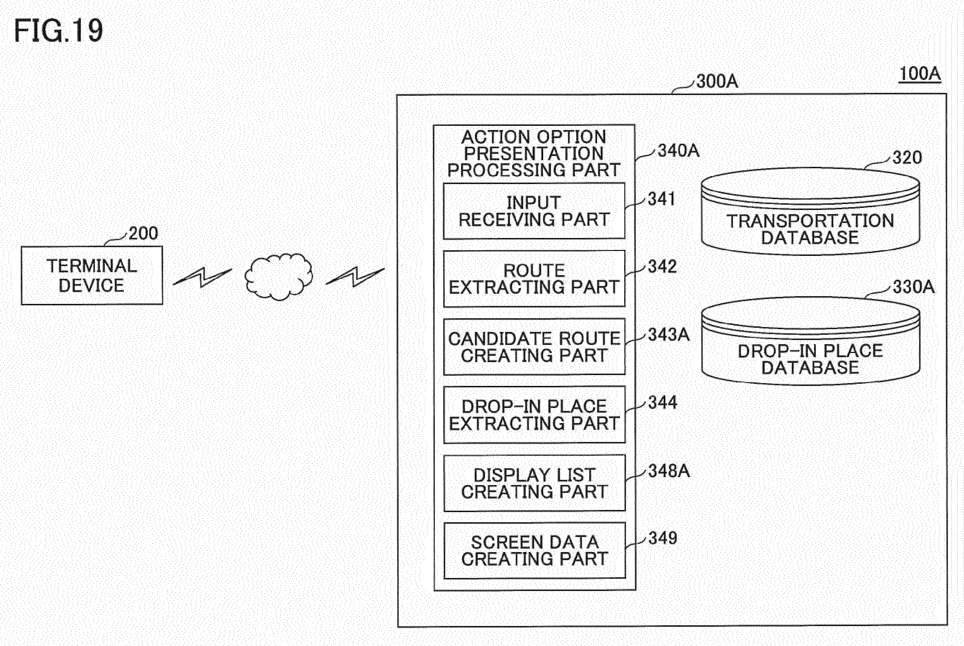

FIG. 19 is a drawing illustrating a functional configuration of the server of the second embodiment. The drop-in place database 330A included in the server 300A of the present embodiment will be described later in detail.

The action option presentation processing part 340A of the present embodiment includes an input receiving part 341, a route extracting part 342, a candidate route creating part 343A, a drop-in place extracting part 344, a display list creating part 348A, and a screen data creating part 349.

The candidate route creating part 343A creates a list of candidate routes in which the respective routes are associated with waiting times before travel starts.

The display list creating part 348A of the present embodiment creates a display list based on a difference between a waiting time associated with a route ID and a recommended staying time associated with a drop-in place ID. The display list will be described later in detail.

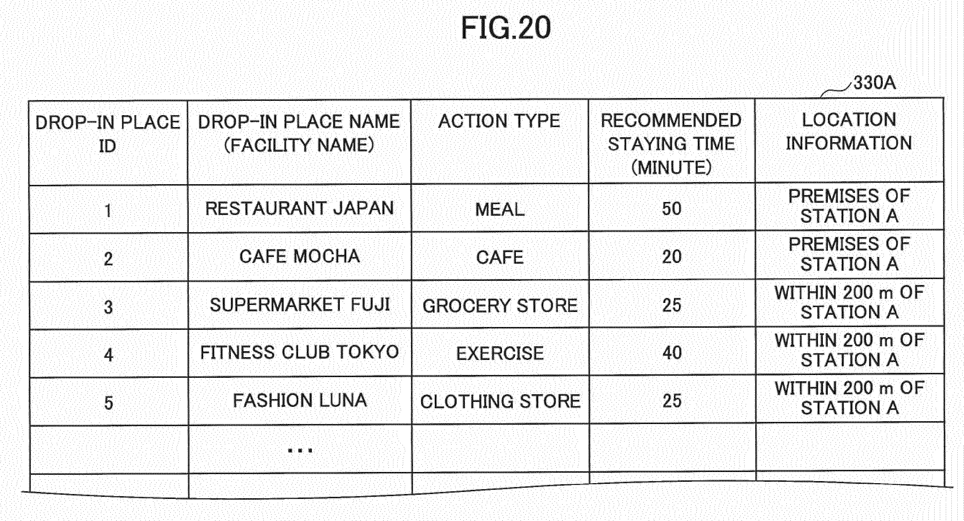

FIG. 20 is a drawing illustrating an example of the drop-in place database of the second embodiment. The drop-in place database 330A of the present embodiment includes, as information items, a drop-in place ID, a drop-in place name, an action type, a recommended staying time, and location information. Descriptions of the items are as described in FIG. 11.

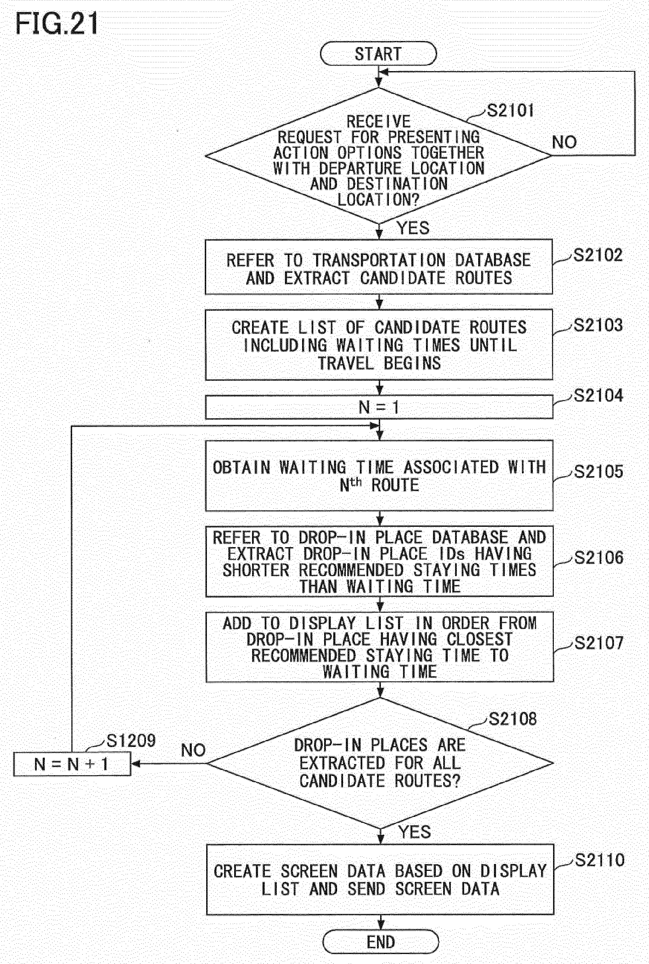

Next, referring to FIG. 21, an operation of the server 300A of the present embodiment will be described. FIG. 21 is a flowchart illustrating the operation of the server of the second embodiment.

The processing in step S2101 and step S2102 of FIG. 21 is the same as that in step S1201 and step S1202 of FIG. 12, and thus a description thereof will be omitted.

Following step S2102, the action option presentation processing part 340A of the server 300A causes the candidate route creating part 343A to create a list of candidates in which each candidate route extracted in step S2102 is associated with a corresponding waiting time (step S2103). Next, the action option presentation processing part 340A sets a variable N to 1 (step S2104).

Next, the action option presentation processing part 340A causes the drop-in place extracting part 344 to obtain a waiting time that is associated with the $N^{th}$ route of the list of candidates created in step S2103 (step S2105).

Next, the drop-in place extracting part 344 refers to the drop-in place database 330A and extracts drop-in place IDs having shorter recommended staying times than the waiting time of the N$^{th}$ route (step S2106) .

Next, the action option presentation processing part 340A causes the display list creating part 348A to create a display list. In the display list, the drop-in place IDs are associated with the route ID in order from the drop-in place ID having the closest recommended staying time to the waiting time of the route ID (step S2107).

Next, the action option presentation processing part 340A determines whether the processing from step S2105 through step S2107 is executed for all the candidate routes extracted in step S2102 (step S2108). In step S2108, when the processing is determined not to be executed for all the candidate routes, the action option presentation processing part 340A sets the variable N to N + 1 (step S2109) and returns to step S2105.

In step S2108, when the action option presentation processing part 340A determines that the processing is executed for all the candidate routes, the action option presentation processing part 340 proceeds to step S2110. The processing in step S2110 is the same as that in step S1213, and thus a description thereof will be omitted.

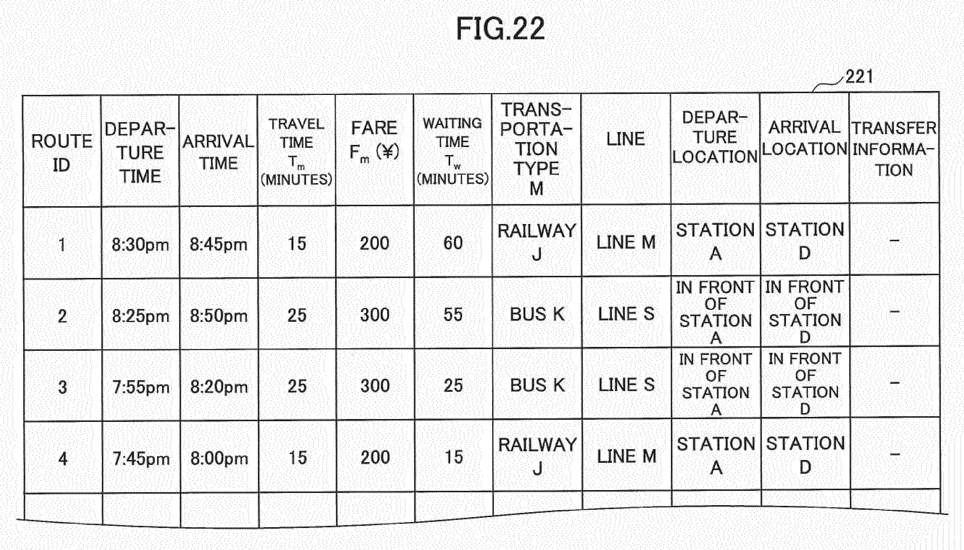

Next, referring to FIG. 22, a list of candidates of the present embodiment will be described. FIG. 22 is a drawing illustrating an example of the list of candidates of the second embodiment.

A list of candidates 221 illustrated in FIG. 22 includes, as information items, a route ID, a departure time, an arrival time, a travel time, a fare, a waiting time, a transportation type, a line, a departure location, and an arrival location. Namely, the list of candidates 221 of the present embodiment does not include an item representing a congestion level. Descriptions of the items are as described in FIG. 13.

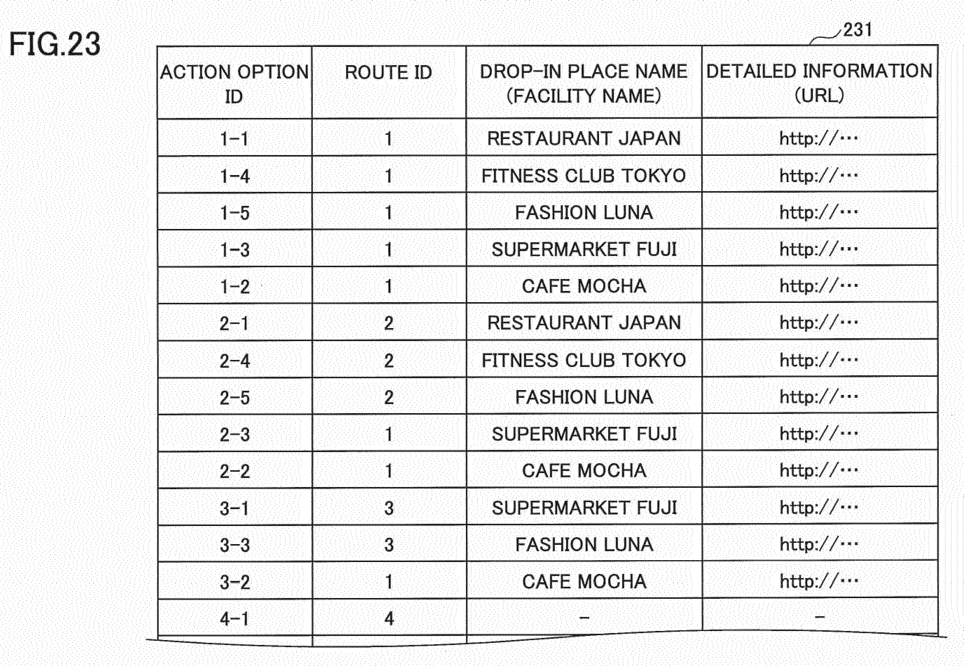

Next, referring to FIG. 23, the display list of the present embodiment will be described. FIG. 23 is a drawing illustrating an example of the display list of the second embodiment.

A display list 231 illustrated in FIG. 23 includes, as information items, an action option ID, a route ID, a drop-in place name, and detailed information. Descriptions of the items included in the display list 231 are as described in FIG. 14.

A process of creating the display list 231 of the present embodiment will be described below in detail.

First, the drop-in place extracting part 344 of the present embodiment extracts drop-in place IDs as potential drop-in places for a candidate route identified by a route ID 1 of the list of candidates 221. The waiting time associated with the route ID 1 is 60 minutes. Therefore, by referring to the drop-in place database 330, the drop-in place extracting part 344 extracts the drop-in place IDs 1 through 5 having shorter recommended staying times than 60 minutes.

Next, the display list creating part 348A combines the route ID with the obtained drop-in place IDs as action plans, and stores the action plans in the display list 231 in order from the drop-in place ID having the closest recommended staying time to the waiting time.

Of the drop-in place IDs 1 through 5 included in the drop-in place database 330A, the drop-in place ID having the closest recommended staying time to the waiting time are the drop-in place ID 1 and the drop-in place ID 4. Therefore, the display list creating part 348A combines the route ID with either one of the drop-in place ID 1 and the drop-in place ID 4 as an action plan ID, and stores the action plan ID at the top of the display list 231.

In a case where drop-in place IDs have the same recommended staying times, by referring to location information associated with the drop-in place IDs, the drop-in place ID whose location is nearer to the terminal device 200 may be associated with the route ID first.

Next, the display list creating part 348A obtains the drop-in place ID 5 whose recommended staying time is the second closest to the waiting time, after the drop-in place IDs 1 and 4. The display list creating part 348A combines the route ID 1 with the drop-in place ID 5 as an action option ID 1-5, and stores the action option ID 1-5 in the display list 231.

When the display list creating part 348A stores, in the display list 231, an action option ID included in a route ID, the display list creating part 348A associates the action option ID with the route ID, a drop-in place name, and detailed information, respectively.

Further, the display list creating part 348A of the present embodiment may store, in the display list 231, the action option IDs associated with respective route IDs in order from the route ID that has the shortest travel time.

Alternatively, when a departure time is specified as a request condition, the display list creating part 348A of the present embodiment may store, in the display list 231, the action option IDs associated with the respective route IDs in order from the route ID having the earliest arrival time within a range satisfying the request condition. When an arrival time is specified as a request condition, the display list creating part 348A of the present embodiment may store, in the display list 231, the action option IDs associated with the respective route IDs in order from the route ID having the latest departure time within a range satisfying the request condition.

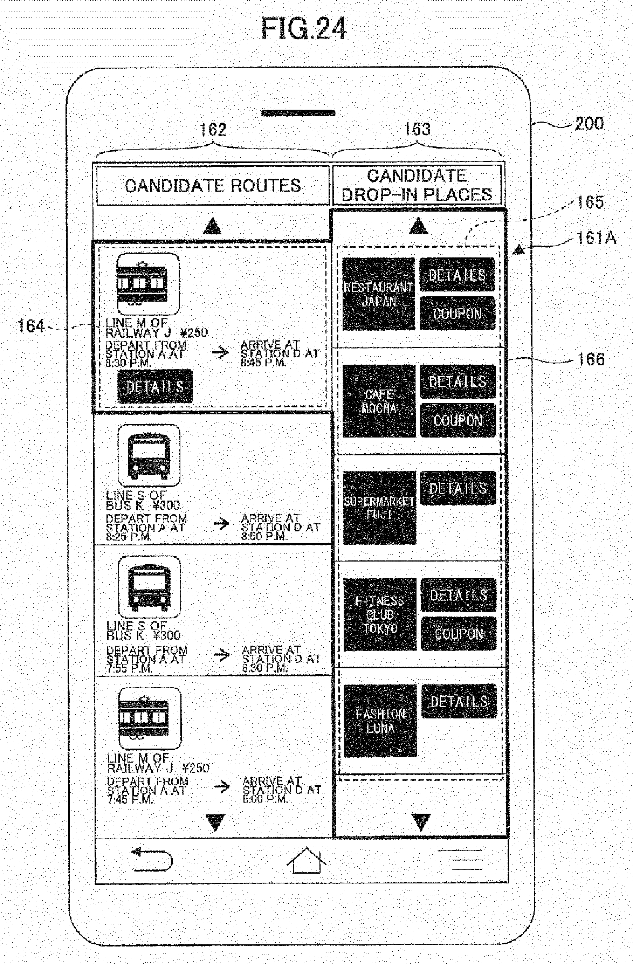

Next, referring to FIG. 24, a screen for displaying action options based on the display list 231 will be described.

FIG. 24 is a drawing illustrating an example in which a screen for presenting action options is displayed on the terminal device of the second embodiment.

In FIG. 24, a display field 162 of a presentation screen 161A displays routes only and does not display congestion levels. Also, drop-in places are displayed in a display field 162 of the presentation screen 161A in order from the drop-in place having the closest recommended staying time to the waiting time.

According to the present embodiment, when a route is selected, action options that combine the route with the associated drop-in places are displayed. Therefore, according to the present embodiment, it is possible to allow a user of the terminal device 200 to make effective use of a waiting time.

(Third Embodiment)

In the following, a third embodiment will be described with reference to the drawings. A difference from the first embodiment is that candidate route options are displayed as action options on a presentation screen of the terminal device 200. In the following description of the third embodiment, the difference from the first embodiment will be described. The elements having the same functions or configurations as those of the first embodiment are referred to by the same numerals, and a duplicate description thereof will be omitted.

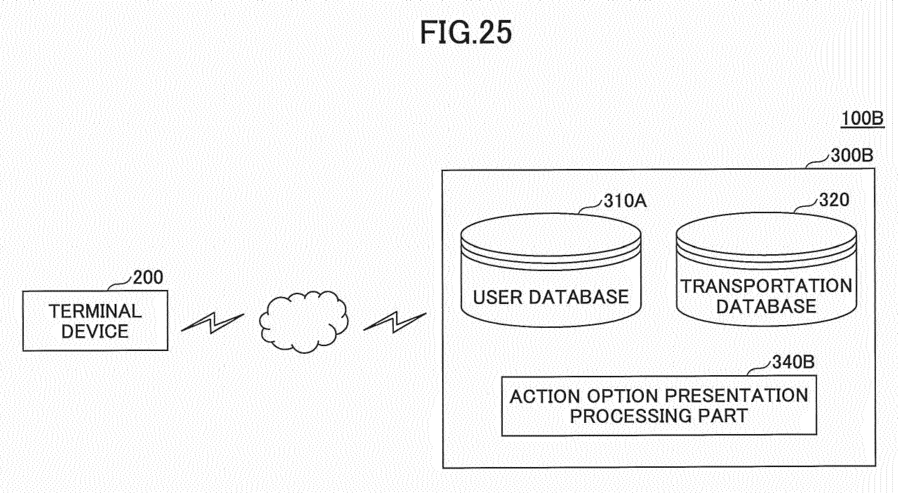

FIG. 25 is a drawing illustrating a system configuration of an action option presentation system of the third embodiment. An action option presentation system 100B of the present embodiment includes a server 300B.

The server 300B of the present embodiment includes a user database 310A, a transportation database 320, and an action option presentation processing part 340B.

The server 300B of the present embodiment regards a candidate route as an action option. Action options are arranged in descending order of their satisfaction levels calculated by using congestion levels and waiting times of transportation, and are displayed on the terminal device 200.

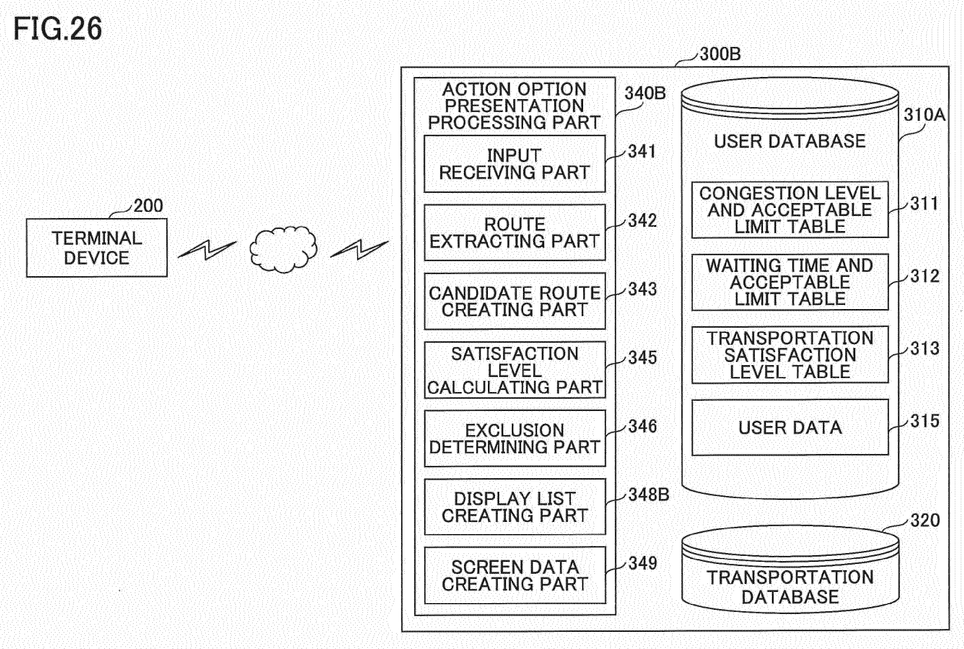

FIG. 26 is a drawing illustrating a functional configuration of the server of the third embodiment. The user database 310A of the present embodiment stores a congestion level and acceptable limit table 311, a waiting time and acceptable limit table 312, a transportation satisfaction level table 313, and user data 315.

The action option presentation processing part 340B of the present embodiment includes an input receiving part 341, a route extracting part 342, a candidate route creating part 343, a satisfaction level calculating part 345, an exclusion determining part 346, a display list creating part 348B and a screen data creating part 349.

The display list creating part 348B of the present embodiment creates a display list. In the display list, action options are arranged in order of their satisfaction levels calculated by using waiting times and congestion levels with respect to the respective route IDs. The display list will be described later in detail.

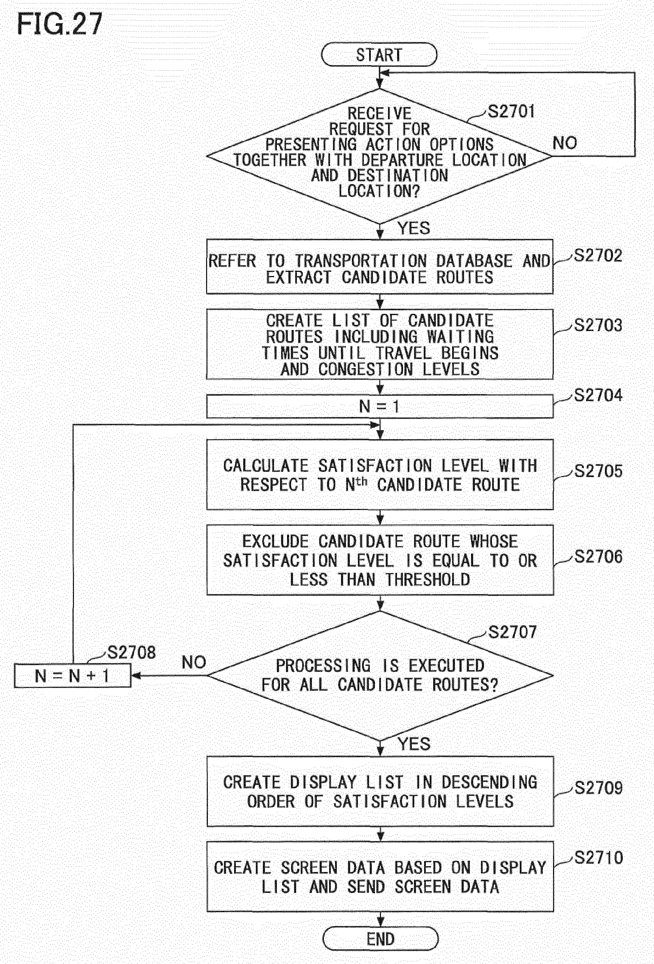

Referring to FIG. 27, an operation of the server 300B will be described below. FIG. 27 is a flowchart illustrating the operation of the server of the third embodiment.

The processing from step S2701 through step S2704 is the same as that from step S1201 through step S1204, and thus a description thereof will be omitted.

Following step S2704, the action option presentation processing part 340B of the server 300B causes the satisfaction level calculating part 345 to calculate a satisfaction level V with respect to the $N^{th}$ route of the list of candidates 131 created in step S2703 (step S2705).

A process of calculating a satisfaction level by the satisfaction level calculating part 345 of the present embodiment will be described below. The satisfaction level calculating part 345 of the present embodiment calculates a satisfaction level by using the formula (1). In a case where values for terms in the formula (1) are not obtained, 0 is substituted for such terms in order to calculate a satisfaction level V.

Accordingly, the satisfaction level calculating part 345 of the present embodiment calculates a satisfaction level V by substituting 0 for the sixth term and the seventh term on the right side of the formula (1).

Next, the action option presentation processing part 340B causes the exclusion determining part 346 to exclude a candidate route whose satisfaction level V is equal to or less than a predetermined threshold from candidate routes presented (step S2706).

Next, the action option presentation processing part 340B determines whether the processing step S2705 and step S2706 is executed for all the candidate routes extracted in S2702 (step S2707) .

In step S2707, when the processing is determined not to be executed for all the candidate routes, the action option presentation processing part 340B sets the variable N to N + 1 (step S2708) and returns to step S2705.

In step S2707, when the action option presentation processing part 340B determines that the processing is executed for all the candidate routes, the action option presentation processing part 340 causes the display list creating part 348B to create a display list. In the display list, candidate routes are stored in descending order of their satisfaction levels V (step S2709).

Next, the action option presentation processing part 340B causes the screen data creating part 349 to create screen data based on the display list and send the screen data to the terminal device 200 (step S2710). The processing ends.

Accordingly, in the display list created by the display list creating part 348B of the present embodiment, candidate routes are stored in descending order of their satisfaction levels V.

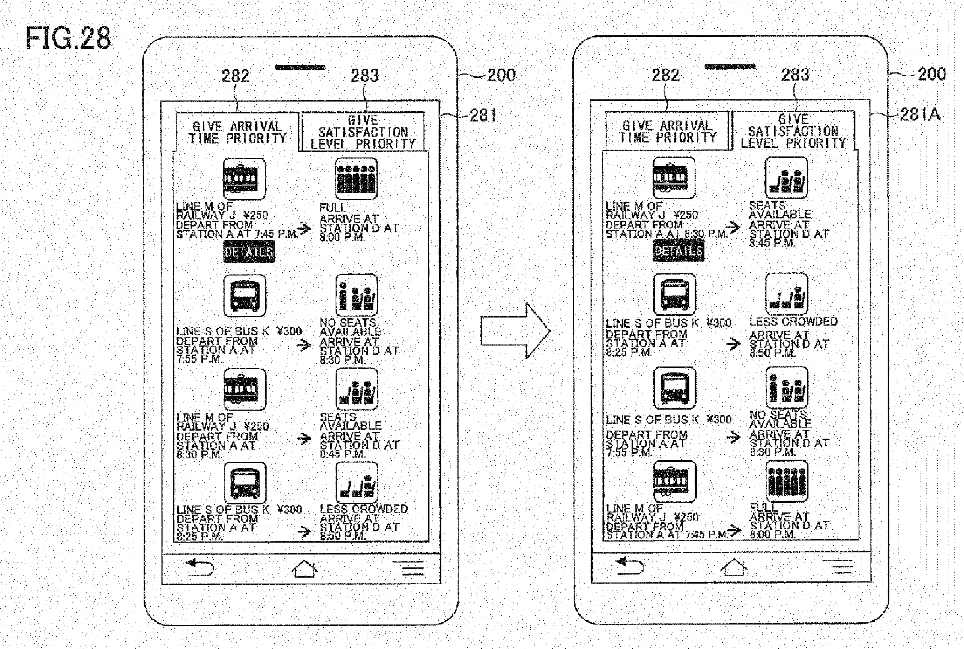

Referring to FIG. 28, a screen for presenting action options of the terminal device 200 of the present embodiment will be described. FIG. 28 is a drawing illustrating an example in which the screen for presenting action options is displayed on the terminal device of the third embodiment.

In the present embodiment, the terminal device 200 may switch between a screen displaying candidate routes extracted by a general route search and a screen displaying candidate routes in order of their satisfaction levels V.

In FIG. 28, a screen 281 displayed on the terminal device 200 is an example of a screen displaying candidate routes extracted by the general route search. Also, a screen 281A is an example of a screen displaying candidate routes in order of their satisfaction levels V.

The screen 281 and the screen 281A of the present embodiment include a tab 282 and a tab 283. The tab 282 is a tab that displays candidate routes obtained by the general route search. The tab 283 is a tab displaying candidate routes in order of their satisfaction levels V.

The screen 281 indicates a state in which the tab 282 is selected, and candidate routes obtained by the general search are displayed in order from the earliest arrival time.

As a request condition, in a case where an arrival time is specified instead of a departure time, the departure time is given priority over the arrival time. Namely, candidate routes may be displayed in the tab 282 in order from the latest departure time.

The screen 281 gives the arrival time priority over the congestion level. Therefore, candidate routes are displayed at the top in order from the earliest arrival time, regardless of the congestion level.

When the tab 283 of the screen 281 is selected, the screen 281 switches to the screen 281A. The screen 281A gives the satisfaction level V priority over the arrival time. Therefore, candidate routes having relatively low congestion levels are displayed at the top.

As described above, in the present embodiment, candidate routes are regarded as action options, and satisfaction levels V are calculated by using waiting times and congestion levels with respect to the respective action options. Accordingly, the candidate routes can be displayed in order of their satisfaction levels V.

(Fourth Embodiment)

In the following, a fourth embodiment will be described with reference to the drawings. A difference from the first embodiment is that drop-in place options are displayed as action options on a presentation screen of the terminal device 200. In the following description of the fourth embodiment, the difference from the first embodiment will be described. The elements having the same functions or configurations as those of the first embodiment are referred to by the same numerals, and a duplicate description thereof will be omitted.

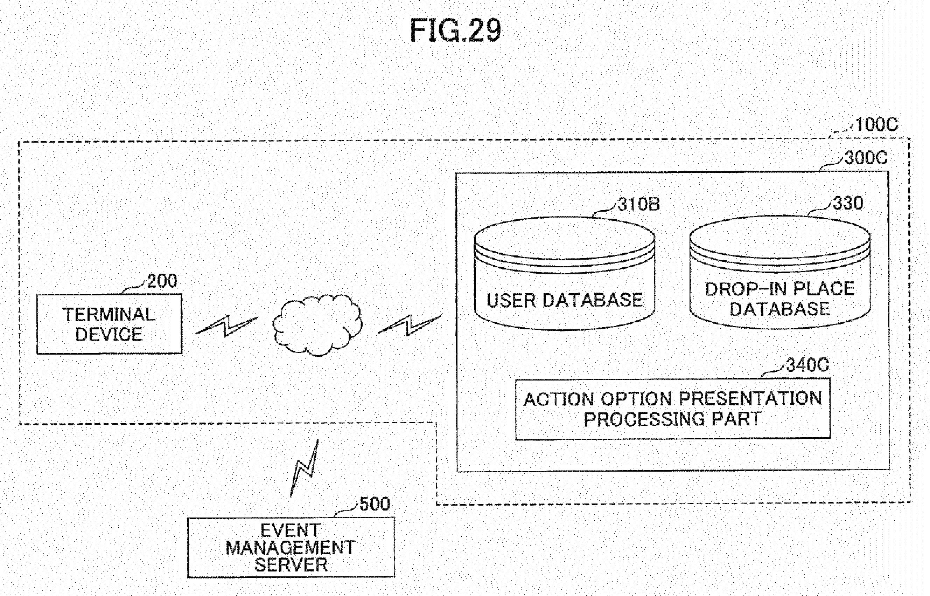

FIG. 29 is a drawing illustrating a system configuration of an action option presentation system of the fourth embodiment. An action option presentation system 100C of the present embodiment includes a server 300C. Further, an action option presentation system 100C of the present embodiment is coupled to an event management server 500.

The event management server 500 of the present embodiment manages information on events held in drop-in places in the vicinity of the terminal device 200. To be more specific, in a case where a user of the terminal device 200 is located in a shopping mall, the event management server 500 manages information on events held in the shopping mall. In the following description, information managed by the event management server 500 is referred to as event information.

Event information of the present embodiment includes, for example, the details of an event held in a mall serving as a candidate drop-in place, the congestion level of the mall, and a start time and an end time of the event.

The server 300C of the present embodiment includes a user database 310B, a drop-in place database 330, and an action option presentation processing part 340C.

The server 300C of the present embodiment displays, on the terminal device 200, an event held at a time later than when a request for presenting action options is received and the associated candidate drop-in places where the user can drop in before the event starts are displayed as an action option. In the present embodiment, action options are displayed on the terminal device 200 in order of their satisfaction levels V. Such a satisfaction level V is calculated by using a waiting time until an event starts and a congestion level of a place where the event is held.

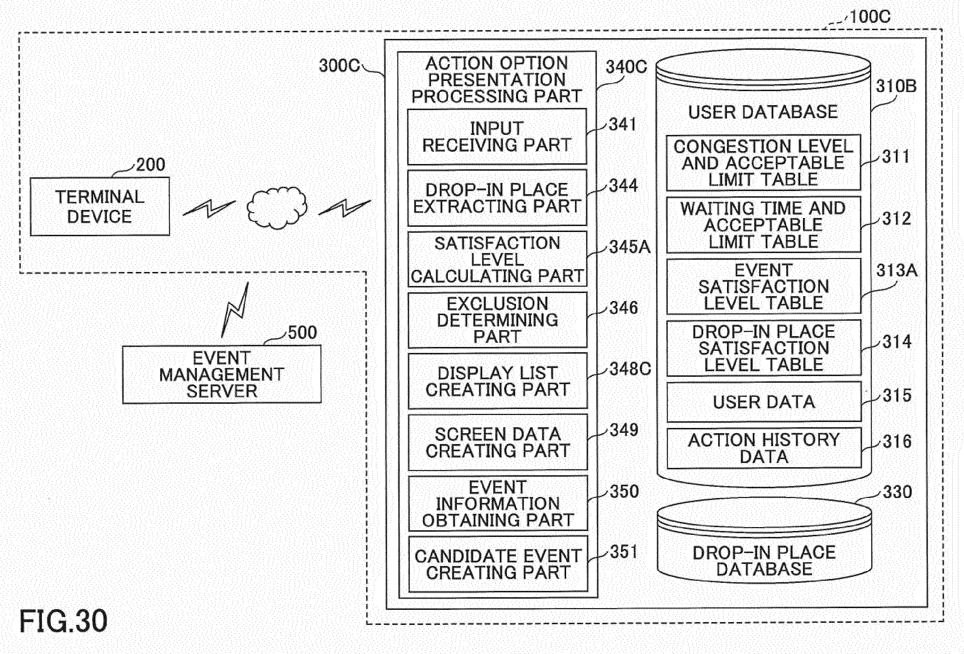

FIG. 30 is a drawing illustrating a functional configuration of the server of the fourth embodiment.

The user database 310B of the present embodiment stores a congestion level and acceptable limit table 311, a waiting time and acceptable limit table 312, an event satisfaction level table 313A, a drop-in place satisfaction level table 314, user data 315, and action history data 316.

The event satisfaction level table 313A of the present embodiment is the same as the transportation satisfaction level table 313 illustrated in FIG. 7, except that transportation is replaced by events.

Namely, in the event satisfaction level table 313A, for each event, a satisfaction level $P_m1$ with respect to an event and a satisfaction level coefficient $R_m1$ for event duration time are associated with each other. The satisfaction level coefficient for travel time $R_m$ of the transportation satisfaction level table 313 is replaced by the satisfaction level coefficient $R_m1$ for event duration time of the event satisfaction level table 313A.

The action option presentation processing part 340C of the present embodiment includes an input receiving part 341, a drop-in place extracting part 344, a satisfaction level calculating part 345A, an exclusion determining part 346, a display list creating part 348C, a screen data creating part 349, an event information obtaining part 350, and an candidate event creating part 351.

When the satisfaction level calculating part 345A of the present embodiment calculates a satisfaction level, the terms representing transportation included in the formula (1) are replaced by the terms representing events.

The display list creating part 348C of the present embodiment creates a display list in which respective events are associated with candidate drop-in places.

The event information obtaining part 350 obtains, from the event management server 500, event information on events scheduled to be held at a later time. In the present embodiment, an event scheduled to be held at a later time is for a candidate action schedule of the user of the terminal device 200.

The candidate event creating part 351 creates a list of candidate events based on the obtained event information.

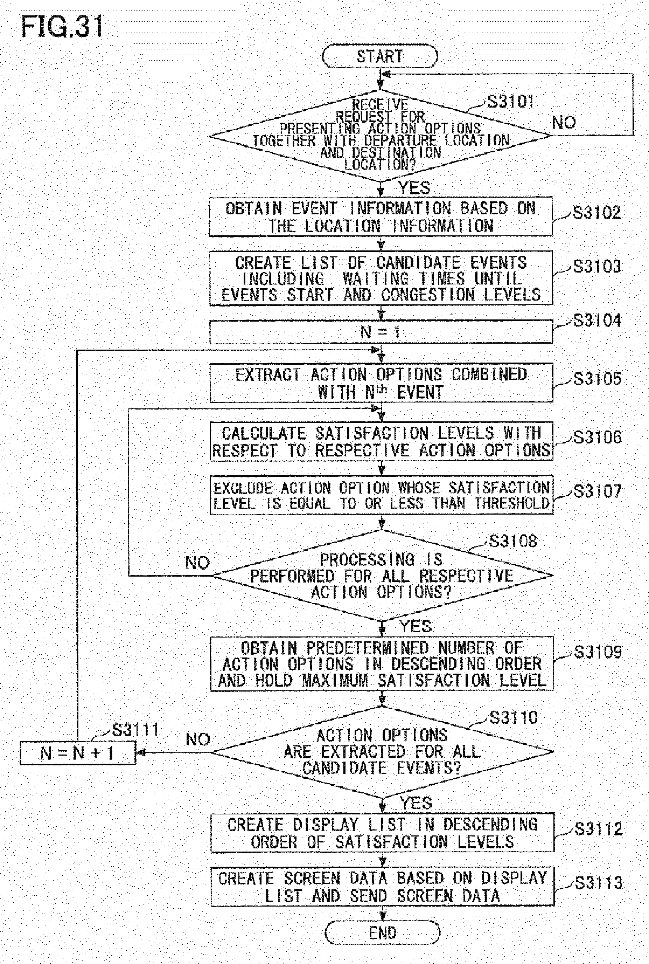

Referring to FIG. 31, an operation of the server 300C of the present embodiment will be described below. FIG. 31 is a flowchart illustrating the operation of the server of the fourth embodiment.

The action option presentation processing part 340C of the server 300C of the present embodiment determines whether the input receiving part 341 receives location information indicating the current location of the terminal device 200 and receives a request for presenting action options (step S3101). In step S3101, in a case where the request for presentation is not received, the server 300 waits until the request for presentation is received.

In step S3101, in a case where the request for presentation is received, the action option presentation processing part 340C causes the event information obtaining part 350 to refer to the event management server 500 and extract event information on events held within a location range based on the location information obtained in step S3101 (step S3102). For example, the event information obtaining part 350 may obtain event information on events held at places within a 1 km radius of the location indicated by the location information.

Next, the action option presentation processing part 340C causes the candidate event creating part 351 to create a list of candidate events in which the respective events are associated with waiting times from the request for presentation being received until start of the respective events and are also associated with congestion levels (step S3103). The list of candidate events will be described later in detail.

Next, the action option presentation processing part 340C sets a variable N to 1 (step S3104) . Next, the action option presentation processing part 340C causes the drop-in place extracting part 344 to refer to the drop-in place database 330 and extract drop-in places that are combined with the $N^{th}$ event of the list of candidate events (step S3105).

To be more specific, the drop-in place extracting part 344 extracts, as candidate drop-in places, drop-in places that have shorter recommended staying times than the waiting times of the $N^{th}$ event of the list of the candidate events.

Next, the action option presentation processing part 340C causes the satisfaction level calculating part 345A to calculate satisfaction levels with respect to respective action options that associate the $N^{th}$ event with the respective candidate drop-in places (step S3106).

Now, a process of calculating a satisfaction level with respect to an action option by the satisfaction level calculating part 345A of the present embodiment will be described.

In the present embodiment, a satisfaction level with respect to an action option is calculated by using the following formula (1-1):

$$\text{(Formula 1-1)}$$
$$V = L_c(C1) + L_w(T_{w1}) - P_{m1} + R_{m1} \times T_{m1} + S_k + I_k \times B_k + A$$

In the formula (1), V represents a satisfaction level with respect to an action option, $L_c(C1)$ represents a satisfaction level with respect to congestion, and $L_w(T_{w1})$ represents a satisfaction level with respect to a waiting time. Also, in the formula (1), $P_m1$ is a satisfaction level with respect to an event type, $R_m1$ is a satisfaction level coefficient for duration time of the event type, and $T_{m1}$ represents the duration time of the event.

By using the formula (1-1), the satisfaction level calculating part 345A of the present embodiment calculates the satisfaction level V with respect to the action option that associates the candidate event with the candidate drop-in places extracted in step S3105.

The processing from step S3107 through S3109 is the same as that from step S1207 through step S1209, and thus a description thereof will be omitted.

Next, the action option presentation processing part 340C determines whether the processing from step S3105 through step S3107 is executed for all the candidate events extracted in S3102 (step S3110). In step S3110, when the processing is determined not to be executed for all the candidate events, the action option presentation processing part 340 sets the variable N to N + 1 (step S3111) and returns to step S3105.

In step S3110, when the action option presentation processing part 340C determines that the processing is executed for all the candidate events, the action option presentation processing part 340C causes the display list creating part 348C to create a display list. In the display list, groups of action options are arranged in descending order of maximum values of the satisfaction levels V (step S3112). Next, the action option presentation processing part 340C causes the screen data creating part 349 to create screen data for displaying the action options based on the display list and send the screen data to the terminal device 200 (step S3113). The processing ends.

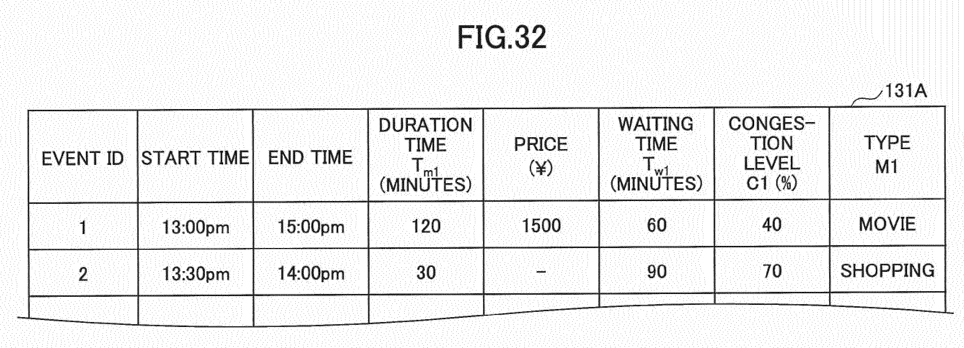

Referring to FIG. 32, a list of candidate events will be described. FIG. 32 is a drawing illustrating an example of the list of candidate events of the fourth embodiment.

A list of candidate events 131A illustrated in FIG. 32 includes, as information items, an event ID, a start time, an end time, a duration time, a price, a waiting time, a congestion level, and an event type.

The item "event ID" represents an identifier for identifying an event that is indicated by event information extracted by the event information obtaining part 350. The item "start time" represents a time when the event starts. The item "end time" represents a time when the event ends.

The item "duration time" represents a time $T_{m1}$ from the start time to the end time. The item "price" represents a price for participating in the event. The item "waiting time" represents a time $T_{w1}$ from a request for presenting action options being received until the start time. The item "congestion level" represents a congestion level C1 associated with the event and the duration time.

Once the candidate event creating part 351 of the present embodiment receives the request for presenting action options by the input receiving part 341, the event information obtaining part 350 obtains event information based on the location information and the current time. In the present embodiment, a time when the request for obtaining the event information is received may be regarded as a time when a request for presenting action options is received.

FIG. 32 illustrates an example in which event information on an event ID 1 and an event ID 2 is extracted.

In the case of the event ID 1 in the list of candidate events 131A, the event type is a movie, the start time is 13:30 p.m., and the end time is 15:00 p.m. Also, in the example of FIG. 13, a request for presenting action options is received at 12:00 p.m.

In this case, the candidate event creating part 351 sets the duration time $T_{m1}$ to 120 minutes from the start time 13:00 p.m. to the end time 15:00 p.m. Also, the candidate event creating part 351 sets the waiting time $T_{w1}$ to 60 minutes from 12:00 p.m. at which the request for presenting action option is received to the start time 13:00 p.m.

Further, the candidate event creating part 351 obtains a congestion level included in the event information and sets the obtained congestion level as a congestion level C1.

In the way described above, the candidate event creating part 351 of the present embodiment creates the list of candidate events 131A that includes congestion levels C1 and waiting times $T_{w1}$ of the respective candidate events.

The events included in the list of candidate events 131A of the present embodiment indicate actions that may be performed by the user of the terminal device 200.

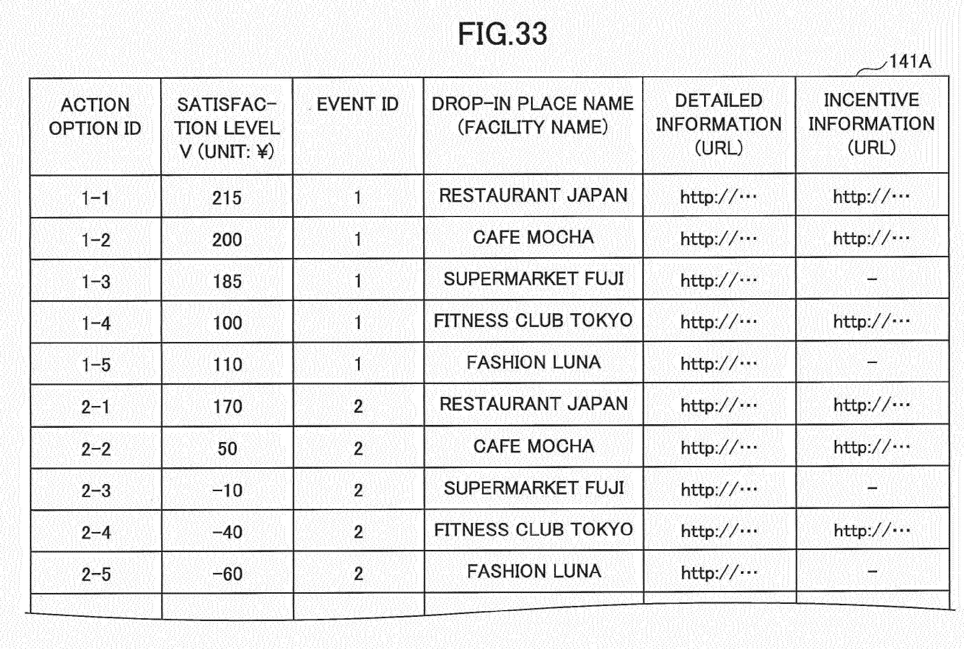

Next, referring to FIG. 33, the display list created by the display list creating part 348C will be described. FIG. 33 is a drawing illustrating an example of the display list of the fourth embodiment.

A display list 141A illustrated in FIG. 33 includes, as information items, an action option ID, a satisfaction level, an event ID, a drop-in place name, detailed information, and incentive information.

The item "action option ID" represents an identifier for identifying an action option. The action option ID of the present embodiment includes an event ID and a drop-in place ID. To be more specific, the event ID and the drop-in place ID included in the action option ID of the present embodiment are connected with a hyphen [-].

The item "satisfaction level" represents a satisfaction level V with respect to the action option calculated by the satisfaction level calculating part 345A. The item "detailed information" represents a URL for displaying detailed information about an associated drop-in place on the terminal device 200. The item "incentive information" represents a URL for displaying incentives such as coupons for the associated drop-in place on the terminal device 200.

A process of creating the display list 141A will be described below in detail.

First, the drop-in place extracting part 344 of the present embodiment extracts drop-in place IDs as potential drop-in places for the candidate event identified by the event ID 1 of the list of candidate events 131A. The waiting time associated with the event ID 1 is 60 minutes. Therefore, by referring to the drop-in place database 330, the drop-in place extracting part 344 extracts the drop-in place ID 1 having a recommended staying time of 50 minutes, which is shorter than 60 minutes.

Next, the satisfaction level calculating part 345A obtains, by referring to the list of candidates 131A, the duration time $T_{m1}$, the waiting time $T_{w1}$, the congestion level C1, and the event type MI associated with the event ID 1. Further, the satisfaction level calculating part 345A obtains, by referring to the drop-in place database 330, the incentive Bk given to the drop-in place ID 1.

Moreover, by referring to the congestion level and acceptable limit table 311 of the user database 310B, the satisfaction level calculating part 345A obtains a satisfaction level $L_c(C1)$ associated with the congestion level C. Also, the satisfaction level calculating part 345 A obtains, by referring to the waiting time and acceptable limit table 312, a satisfaction level $L_w(T_{w1})$ associated with the waiting time $T_w$.

Further, by referring to the event satisfaction level table 313A, the satisfaction level calculating part 345A obtains

a satisfaction level $P_m$ and a satisfaction level coefficient with respect to the event type M1. Further, by referring to the drop-in place satisfaction level table 314, the satisfaction level calculating part 345A obtains a satisfaction level $S_k$ and a satisfaction level coefficient $I_k$ for incentive with respect to the drop-in place ID 1.

Next, the satisfaction level calculating part 345A calculates a satisfaction level V by using the formula (1-1). This satisfaction level V is a satisfaction level with respect to an action option ID 1-1 that associates the event ID 1 with the drop-in place ID 1. At this time, the exclusion determining part 346 excludes an action option ID whose satisfaction level V is equal to or less than the predetermined threshold from being stored in the display list.

In the example of FIG. 33, drop-in place IDs 2, 3, 4, and 5 also have shorter recommended staying times than the waiting time of the event ID 1. Therefore, the satisfaction level calculating part 345A calculates satisfaction levels V with respect to the action option IDs 1-2, 1-3, 1-4, and 1-5, respectively.

Further, the display list creating part 348C obtains a predetermined number of action option IDs associated with an event ID in descending order of their satisfaction levels V. In the present embodiment, the predetermined number is 5. Therefore, the display list creating part 348C obtains the five action option IDs 1-1, 1-2, 1-3, 1-4, and 1-5 in descending order of their satisfaction levels V.

In the way described above, for all event IDs included in the list of candidate events 131A, the action option presentation processing part 340C of the present embodiment calculates satisfaction levels V with respect to respective action options that associate the respective event IDs with drop-in place IDs.

Further, the display list creating part 348C obtains event IDs in descending order of maximum values of the satisfaction levels V. Subsequently, the display list creating part 348C stores, in the display list 141A, action option IDs included for each of the obtained event IDs in descending order of satisfaction levels V.

Upon the display list 141A being created, the screen data creating part 349 of the present embodiment refers to the display list 141A, creates screen data for displaying the action options on the terminal device 200, and sends the screen data to the terminal device 200.

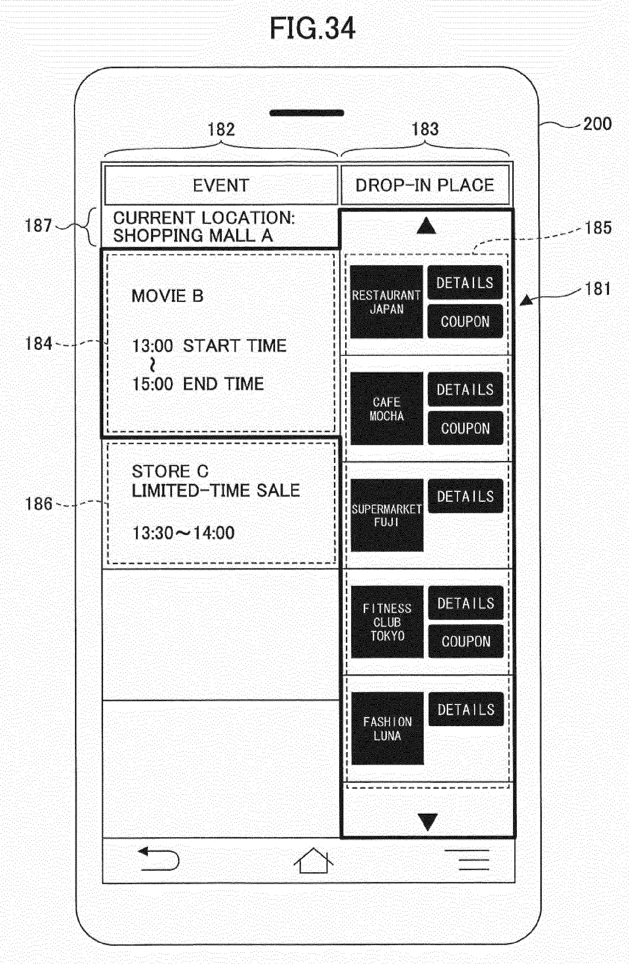

Referring to FIG. 34, a screen displayed on the terminal device 200 of the present embodiment will be described below.

FIG. 34 is a drawing illustrating an example in which the screen for presenting action options is displayed on the terminal device of the fourth embodiment. FIG. 34 illustrates that a presentation screen 181 for presenting action options is displayed on the terminal device 200.

The presentation screen 181 includes a display field 182 and a display field 183. The display field 182 displays candidate events and congestion levels C1 of the respective events.

The display field 183 displays candidate drop-in places for the event selected in the display field 182.

In the present embodiment, the events are displayed in the display field 182 in descending order from the event having the highest maximum value of the satisfaction level V associated with the event ID. Therefore, among the candidate events combined with the candidate drop-in places, the event having the highest satisfaction level V is an event 184.

Further, in the present embodiment, the candidate drop-in places are displayed in the display field 183 in descending order from the drop-in place having the highest satisfaction level V when combined with the selected event.

Therefore, when the event 184 is selected in the display field 182, the drop-in place "Restaurant Japan" having the highest satisfaction level V when combined with the event 184 is displayed at the top of the display area 185.

Accordingly, when an event is selected in the display field 182 of the presentation screen 181 of the present embodiment, drop-in places associated with the selected event are displayed in the display field 183. Further, in the present embodiment, when another event 186 is selected in the display field 182, the display field 183 switches the display contents to candidate drop-in places associated with the selected event 186.

Further, in the present embodiment, the presentation screen 181 may display information 187 indicating the location of the terminal device 200. As can be seen from the example of FIG. 34, the terminal device 200 is in shopping mall A.

Moreover, in the present embodiment, event information is obtained by the event management server 500. However, the present invention is not limited thereto, and event information may be preliminarily stored in the server 300 or may be input to the terminal device 200.

As described above, in the present embodiment, it is possible to display an action schedule of the user of the terminal device 200 in association with candidate drop-in places that are combined with the action schedule. Accordingly, according to the present embodiment, it is possible to make effective use of a waiting time.

Further, the present invention is not limited to these embodiments, but various variations and modifications may be made without departing from the scope of the present invention.

[Description of the Reference Numeral]

100, 100A, 100B, 100C action option presentation system
200 terminal device
300, 300A, 300B, 300C server
310, 310A, 310B user database
320 transportation database
330, 330A drop-in place database
340, 340A, 340B, 340C action option presentation processing part
342 route extracting part
343 candidate route creating part
344 drop-in place extracting part
345, 345A satisfaction level calculating part
348, 348A, 348B, 348C display list creating part
349 screen data creating part
500 event management server

**Claims**

1. An action option presentation apparatus comprising,
   an action option presentation processing part configured to extract one or more action options based on route information from a departure location to a destination location that is extracted from departure location information and destination location information, and also based on information indicating one or more places at which to drop in during a period of time before travel starts in accordance with the route information.

2. The action option presentation apparatus according to claim 1, wherein the action option presentation processing part includes a screen data creating part configured to create, from the extracted one or more action options, screen data for displaying the action options.

3. The action option presentation apparatus according to claim 2, wherein the screen data creating part is configured to output the screen data the includes information indicating congestion status of one or more routes indicated by the route information.

4. The action option presentation apparatus according to claim 3, comprising
   a satisfaction level calculating part configured to calculate satisfaction levels with respect to each of the one or more action options by using at least one of waiting times before travel starts in accordance with the route information and the information indicating the congestion status, wherein
   the screen data creating part is configured to create the screen data for displaying the one or more action options in descending order of satisfaction levels.

5. The action option presentation apparatus according to claim 4, wherein the satisfaction level calculating part is further configured to calculate the satisfaction levels with respect to each of the one or more action options by using incentive information given to one or more places.

6. The action option presentation apparatus according to any one of claims 3 to 5, wherein the screen data creating part includes a first display field that displays the one or more routes and a second display field that displays information indicating the one or more places, and the screen data creating part is configured to create the screen data for displaying, in the first display field, the extracted one or more routes in descending order of maximum value of satisfaction levels of the one or more action options associated with the respective route, and for displaying, in the second display field, the information indicating the one or more places in descending order of satisfaction levels of the one or more action options associated with the route selected in the first display field.

7. The action option presentation apparatus according to any one of claims 2 to 6, wherein the screen data creating part is configured to create the screen data for displaying the information indicating the one or more places in association with the incentive information given to the respective one or more places.

8. An action option presentation method performed by a computer, the method comprising,
   extracting, by the computer, one or more action options based on route information from a departure location to a destination location that is extracted from departure location information and destination location information, and also based on information indicating one or more places at which to drop in during a period of time before travel starts in accordance with the route information.

9. An action option presentation program for causing a computer to execute a process comprising:
extracting one or more action options based on route information from a departure location to a destination location that is extracted from departure location information and destination location information, and also based on information indicating one or more places to at which drop in during a period of time before travel starts in accordance with the route information.

10. An action option presentation apparatus comprising,
an action option presentation processing part configured to extract one or more action options based on one or more candidate action schedules that are extracted from location information of a terminal device, and also based on information indicating one or more places at which to drop in during a waiting time before a scheduled action starts.

11. An action option presentation apparatus comprising:

an action option presentation processing part configured to extract one or more action options based on route information from a departure location to a destination location that is extracted from departure location information and destination location information;
a satisfaction level calculating part configured to calculate satisfaction levels with respect to each of the one or more action options by using waiting times before travel starts in accordance with one or more routes indicated by the route information and information indicating congestion status of the one or more routes, and
a screen data creating part configured to create screen data for displaying the one or more action options in descending order of the satisfaction levels.

# FIG.2

100

300

310 USER DATABASE

320 TRANSPORTATION DATABASE

330 DROP-IN PLACE DATABASE

340 ACTION OPTION PRESENTATION PROCESSING PART

200 TERMINAL DEVICE

EP 3 361 439 A1

## FIG.3

MEMORY 35

ARITHMETIC PROCESSING UNIT 36

INTERFACE DEVICE 37

B

INPUT DEVICE 31

OUTPUT DEVICE 32

DRIVE DEVICE 33

AUXILIARY STORAGE 34

RECORDING MEDIUM 38

300

# FIG.4

TERMINAL DEVICE — 200

**100**

**300**

**ACTION OPTION PRESENTATION PROCESSING PART** — 340

- INPUT RECEIVING PART — 341
- ROUTE EXTRACTING PART — 342
- CANDIDATE ROUTE CREATING PART — 343
- DROP-IN PLACE EXTRACTING PART — 344
- SATISFACTION LEVEL CALCULATING PART — 345
- EXCLUSION DETERMINING PART — 346
- SATISFACTION LEVEL HOLDING PART — 347
- DISPLAY LIST CREATING PART — 348
- SCREEN DATA CREATING PART — 349

**USER DATABASE** — 310

- CONGESTION LEVEL AND ACCEPTABLE LIMIT TABLE — 311
- WAITING TIME AND ACCEPTABLE LIMIT TABLE — 312
- TRANSPORTATION SATISFACTION LEVEL TABLE — 313
- DROP-IN PLACE SATISFACTION LEVEL TABLE — 314
- USER DATA — 315
- ACTION HISTORY DATA — 316

**TRANSPORTATION DATABASE** — 320

**DROP-IN PLACE DATABASE** — 330

EP 3 361 439 A1

# FIG.5A

311

| CONGESTION LEVEL C (UNIT: %) | SATISFACTION LEVEL $L_c(C)$ (UNIT: ¥) | ACCEPTABLE LIMIT VALUE |
|---|---|---|
| 0 | 250 | |
| 25 | 200 | |
| 50 | 50 | |
| 75 | 0 | |
| 100 | −100 | 250% |
| 150 | −500 | |
| 200 | −1,000 | |
| 250 | −2,000 | |

# FIG.5B

ACCEPTABLE LIMIT VALUE
FOR CONGESTION
C = 250

# FIG.6A

|  | | 312 |
| WAITING TIME $T_w$ (UNIT: MINUTES) | SATISFACTION LEVEL $L_w(T_w)$ (UNIT: ¥) | ACCEPTABLE LIMIT VALUE |
| --- | --- | --- |
| 0 | 80 | |
| 20 | 0 | |
| 40 | −200 | |
| 60 | −600 | 150 MINUTES |
| 90 | −1,200 | |
| 120 | −1,800 | |
| 150 | −2,700 | |

# FIG.6B

ACCEPTABLE LIMIT VALUE
FOR WAITING TIME
$T_w = 150$

# FIG.7

/313

| TRANSPORTATION TYPE M | SATISFACTION LEVEL $P_m$ (UNIT: ¥) | SATISFACTION LEVEL COEFFICIENT FOR TRAVEL TIME $R_m$ (UNIT: ¥/MINUTES) |
|---|---|---|
| RAILWAY J | 200 | −15 |
| BUS K | 100 | −20 |
| TAXI | 200 | −15 |
| WALKING | 0 | −30 |

# FIG.8

/314

| DROP-IN PLACE ID | DROP-IN PLACE NAME (FACILITY NAME) | SATISFACTION LEVEL $S_k$ (UNIT: ¥) | SATISFACTION LEVEL COEFFICIENT FOR INCENTIVE $I_k$ (NO UNIT) |
|---|---|---|---|
| 1 | RESTAURANT JAPAN | 150 | 0.5 |
| 2 | CAFE MOCHA | 50 | 0.5 |
| 3 | SUPERMARKET FUJI | 50 | 0.5 |
| 4 | FITNESS CLUB TOKYO | 0 | 0.1 |
| 5 | FASHION LUNA | 0 | 0.1 |
| | . . . | | |

# FIG.9

320

| TRANSPORTATION TYPE M | RAILWAY J |
|---|---|
| LINE NAME | LINE M |
| BOARDING PLACE | STATION A |
| EXITING PLACE | STATION D |
| FARE $F_m$ (¥) | 250 |

321

| DEPARTURE TIME | ARRIVAL TIME | CONGESTION LEVEL C (%) |
|---|---|---|
| 7:30pm | 7:45pm | 200 |
| 7:45pm | 8:00pm | 170 |
| 8:00pm | 8:15pm | 180 |
| 8:15pm | 8:30pm | 160 |
| 8:30pm | 8:45pm | 70 |
| 8:45pm | 9:00pm | 100 |
| 9:00pm | 9:15pm | 70 |

322

# FIG.10

320

| TRANSPORTATION TYPE M | BUS K |
|---|---|
| LINE NAME | LINE S |
| BOARDING PLACE | STATION A |
| EXITING PLACE | IN FRONT OF STATION D |
| FARE $F_m$ (¥) | 300 |

323

| DEPARTURE TIME | ARRIVAL TIME | CONGESTION LEVEL C (%) |
|---|---|---|
| 7:25pm | 7:50pm | 150 |
| 7:55pm | 8:20pm | 110 |
| 8:25pm | 8:50pm | 35 |
| 8:55pm | 9:20pm | 25 |

324

# FIG.11

EP 3 361 439 A1

330

| DROP-IN PLACE ID | DROP-IN PLACE NAME (FACILITY NAME) | ACTION TYPE | RECOMMENDED STAYING TIME (MINUTES) | INCENTIVE $B_K$ (¥) | LOCATION INFORMATION |
|---|---|---|---|---|---|
| 1 | RESTAURANT JAPAN | MEAL | 50 | 200 | PREMISES OF STATION A |
| 2 | CAFE MOCHA | CAFE | 20 | 100 | PREMISES OF STATION A |
| 3 | SUPERMARKET FUJI | GROCERY STORE | 25 | – | WITHIN 200 m OF STATION A |
| 4 | FITNESS CLUB TOKYO | EXERCISE | 50 | 200 | WITHIN 200 m OF STATION A |
| 5 | FASHION LUNA | CLOTHING STORE | 40 | – | WITHIN 200 m OF STATION A |
| | . . . | | | | |
| | | | | | |

FIG.12

START

S1201 RECEIVE REQUEST FOR PRESENTING ACTION OPTIONS TOGETHER WITH DEPARTURE LOCATION AND DESTINATION LOCATION? — NO

YES

REFER TO TRANSPORTATION DATABASE AND EXTRACT CANDIDATE ROUTES — S1202

CREATE LIST OF CANDIDATE ROUTES INCLUDING WAITING TIMES UNTIL TRAVEL BEGINS AND CONGESTION LEVELS — S1203

N = 1 — S1204

EXTRACT DROP-IN PLACE IDs THAT ARE COMBINED WITH $N^{th}$ ROUTE — S1205

CALCULATE SATISFACTION LEVELS WITH RESPECT TO RESPECTIVE ACTION OPTIONS — S1206

EXCLUDE ACTION OPTION WHOSE SATISFACTION LEVEL IS EQUAL TO OR LESS THAN THRESHOLD — S1207

S1208 PROCESSING IS PERFORMED FOR ALL RESPECTIVE CANDIDATE DROP-IN PLACES? — NO

YES

OBTAIN PREDETERMINED NUMBER OF ACTION OPTIONS IN DESCENDING ORDER AND HOLD MAXIMUM SATISFACTION LEVEL — S1209

S1211  N = N + 1 ← NO — S1210 DROP-IN PLACES ARE EXTRACTED FOR ALL CANDIDATE ROUTES?

YES

CREATE DISPLAY LIST IN DESCENDING ORDER OF SATISFACTION LEVELS — S1212

CREATE SCREEN DATA BASED ON DISPLAY LIST AND SEND SCREEN DATA — S1213

END

# FIG.13

EP 3 361 439 A1

| ROUTE ID | DEPAR-TURE TIME | ARRIVAL TIME | TRAVEL TIME $T_m$ (MINUTES) | FARE $F_m$ (¥) | WAITING TIME $T_w$ (MINUTES) | CONGES-TION LEVEL C (%) | TRANS-PORTA-TION TYPE M | LINE | DEPAR-TURE LOCA-TION | ARRIVAL LOCA-TION |
|---|---|---|---|---|---|---|---|---|---|---|
| 1 | 8:30pm | 8:45pm | 15 | 200 | 60 | 40 | RAILWAY J | LINE M | STATION A | STATION D |
| 2 | 8:25pm | 8:50pm | 25 | 300 | 55 | 70 | BUS K | LINE S | IN FRONT OF STATION A | IN FRONT OF STATION D |
| 3 | 7:55pm | 8:20pm | 25 | 300 | 25 | 120 | BUS K | LINE S | IN FRONT OF STATION A | IN FRONT OF STATION D |
| 4 | 7:45pm | 8:00pm | 15 | 200 | 15 | 200 | RAILWAY J | LINE M | STATION A | STATION D |

131

## FIG.14

141

| ACTION OPTION ID | SATISFAC-TION LEVEL V (UNIT: ¥) | ROUTE ID | DROP-IN PLACE NAME (FACILITY NAME) | DETAILED INFORMATION (URL) | INCENTIVE INFORMATION (URL) |
|---|---|---|---|---|---|
| 1-1 | 385 | 1 | RESTAURANT JAPAN | http://··· | http://··· |
| 1-2 | 235 | 1 | CAFE MOCHA | http://··· | http://··· |
| 1-3 | 185 | 1 | SUPERMARKET FUJI | http://··· | – |
| 1-4 | 155 | 1 | FITNESS CLUB TOKYO | http://··· | http://··· |
| 1-5 | 135 | 1 | FASHION LUNA | http://··· | – |
| 2-1 | 190 | 2 | RESTAURANT JAPAN | http://··· | http://··· |
| 2-2 | 40 | 2 | CAFE MOCHA | http://··· | http://··· |
| 2-3 | -10 | 2 | SUPERMARKET FUJI | http://··· | – |
| 2-4 | -40 | 2 | FITNESS CLUB TOKYO | http://··· | http://··· |
| 2-5 | -60 | 2 | FASHION LUNA | http://··· | – |
| 3-1 | 170 | 3 | CAFE MOCHA | http://··· | http://··· |
| 3-2 | 120 | 3 | SUPERMARKET FUJI | http://··· | – |
| 3-3 | 70 | 3 | FASHION LUNA | http://··· | – |
| 4-1 | 45 | 4 | – | – | – |
|  |  |  |  |  |  |

# FIG.15

200

REQUEST PRESENTATION
OF ACTION OPTIONS?

151

REQUEST CONDITIONS

152

DEPARTURE
LOCATION | CURRENT LOCATION ▼

ARRIVAL
LOCATION | HOME ▼

DESIRED
TIME | LEAVE NOW ▼

REQUEST

153

# FIG.16

162 — CANDIDATE ROUTES
163 — CANDIDATE DROP-IN PLACES
200
161
165

**Candidate Routes:**

LINE M OF RAILWAY J  ¥250
DEPART FROM STATION A AT 8:30 P.M. → ARRIVE AT STATION D AT 8:45 P.M.
SEATS AVAILABLE
DETAILS

LINE S OF BUS K  ¥300
DEPART FROM STATION A AT 8:25 P.M. → ARRIVE AT STATION D AT 8:50 P.M.
LESS CROWDED

LINE S OF BUS K  ¥300
DEPART FROM STATION A AT 7:55 P.M. → ARRIVE AT STATION D AT 8:30 P.M.
NO SEATS AVAILABLE

LINE M OF RAILWAY J  ¥250
DEPART FROM STATION A AT 7:45 P.M. → ARRIVE AT STATION D AT 8:00 P.M.
FULL

**Candidate Drop-in Places:**

RESTAURANT JAPAN — DETAILS / COUPON
CAFE MOCHA — DETAILS / COUPON
SUPERMARKET FUJI — DETAILS
FITNESS CLUB TOKYO — DETAILS / COUPON
FASHION LUNA — DETAILS

164
17
18
16
166

# FIG.17

162 CANDIDATE ROUTES

163 CANDIDATE DROP-IN PLACES

200

161

165A

166A

164A

LINE M OF RAILWAY J  ¥250
DEPART FROM STATION A AT 8:30 P.M. → ARRIVE AT STATION D AT 8:45 P.M.
SEATS AVAILABLE

LINE S OF BUS K  ¥300
DEPART FROM STATION A AT 8:25 P.M. → ARRIVE AT STATION D AT 8:50 P.M.
LESS CROWDED

LINE S OF BUS K  ¥300
DEPART FROM STATION A AT 7:55 P.M. → ARRIVE AT STATION D AT 8:30 P.M.
NO SEATS AVAILABLE
DETAILS

LINE M OF RAILWAY J  ¥250
DEPART FROM STATION A AT 7:45 P.M. → ARRIVE AT STATION D AT 8:00 P.M.
FULL

CAFE MOCHA
DETAILS
COUPON

SUPERMARKET FUJI
DETAILS

FASHION LUNA
DETAILS

## FIG.18

EP 3 361 439 A1

# FIG.19

TERMINAL DEVICE — 200

300A — 100A

ACTION OPTION PRESENTATION PROCESSING PART — 340A

INPUT RECEIVING PART — 341

ROUTE EXTRACTING PART — 342

CANDIDATE ROUTE CREATING PART — 343A

DROP-IN PLACE EXTRACTING PART — 344

DISPLAY LIST CREATING PART — 348A

SCREEN DATA CREATING PART — 349

TRANSPORTATION DATABASE — 320

DROP-IN PLACE DATABASE — 330A

EP 3 361 439 A1

# FIG.20

330A

| DROP-IN PLACE ID | DROP-IN PLACE NAME (FACILITY NAME) | ACTION TYPE | RECOMMENDED STAYING TIME (MINUTE) | LOCATION INFORMATION |
|---|---|---|---|---|
| 1 | RESTAURANT JAPAN | MEAL | 50 | PREMISES OF STATION A |
| 2 | CAFE MOCHA | CAFE | 20 | PREMISES OF STATION A |
| 3 | SUPERMARKET FUJI | GROCERY STORE | 25 | WITHIN 200 m OF STATION A |
| 4 | FITNESS CLUB TOKYO | EXERCISE | 40 | WITHIN 200 m OF STATION A |
| 5 | FASHION LUNA | CLOTHING STORE | 25 | WITHIN 200 m OF STATION A |
| | ... | | | |

# FIG.21

```
            ┌──────────┐
            │  START   │
            └────┬─────┘
                 ▼
         ╱───────────────╲
        ╱    RECEIVE      ╲        S2101
       ╱  REQUEST FOR      ╲   NO
      ╱ PRESENTING ACTION   ╲─────────┐
      ╲ OPTIONS TOGETHER    ╱         │
      ╲ WITH DEPARTURE      ╱         │
       ╲ LOCATION AND      ╱          │
        ╲ DESTINATION     ╱           │
         ╲  LOCATION?    ╱            │
          ╲────────────╱             │
                 │ YES                │
                 ▼                    │
   ┌──────────────────────────────┐  │
   │ REFER TO TRANSPORTATION       │  │  S2102
   │ DATABASE AND EXTRACT          │  │
   │ CANDIDATE ROUTES              │  │
   └──────────────┬────────────────┘  │
                  ▼                    │
   ┌──────────────────────────────┐  │
   │ CREATE LIST OF CANDIDATE      │  │  S2103
   │ ROUTES INCLUDING WAITING      │  │
   │ TIMES UNTIL TRAVEL BEGINS     │  │
   └──────────────┬────────────────┘  │
                  ▼                    │
   ┌──────────────────────────────┐  │
   │            N = 1              │  │  S2104
   └──────────────┬────────────────┘  │
                  ▼                    │
   ┌──────────────────────────────┐  │
   │ OBTAIN WAITING TIME           │  │  S2105
   │ ASSOCIATED WITH Nth ROUTE     │  │
   └──────────────┬────────────────┘  │
                  ▼                    │
   ┌──────────────────────────────┐  │
   │ REFER TO DROP-IN PLACE         │  │
   │ DATABASE AND EXTRACT DROP-IN   │  │  S2106
   │ PLACE IDs HAVING SHORTER        │  │
   │ RECOMMENDED STAYING TIMES      │  │
   │ THAN WAITING TIME              │  │
   └──────────────┬────────────────┘  │
                  ▼                    │
   ┌──────────────────────────────┐  │
   │ ADD TO DISPLAY LIST IN ORDER   │  │
   │ FROM DROP-IN PLACE HAVING      │  │  S2107
   │ CLOSEST RECOMMENDED STAYING    │  │
   │ TIME TO WAITING TIME           │  │
   └──────────────┬────────────────┘  │
                  ▼                    │
              ╱───────╲               │
   S1209     ╱ DROP-IN  ╲  S2108       │
 ┌───────┐  ╱  PLACES ARE╲             │
 │N = N+1│◄─ EXTRACTED FOR           │
 └───┬───┘ NO╲ ALL CANDIDATE╱         │
     │        ╲  ROUTES?   ╱           │
     └─────────╲──────────╱            │
                  │ YES                │
                  ▼                    │
   ┌──────────────────────────────┐  │
   │ CREATE SCREEN DATA BASED ON    │  │  S2110
   │ DISPLAY LIST AND SEND SCREEN   │  │
   │ DATA                          │  │
   └──────────────┬────────────────┘  │
                  ▼                    
            ┌──────────┐
            │   END    │
            └──────────┘
```

# FIG.22

EP 3 361 439 A1

| ROUTE ID | DEPAR- TURE TIME | ARRIVAL TIME | TRAVEL TIME $T_m$ (MINUTES) | FARE $F_m$ (¥) | WAITING TIME $T_w$ (MINUTES) | TRANS- PORTA- TION TYPE M | LINE | DEPAR- TURE LOCATION | ARRIVAL LOCATION | TRANSFER INFORMA- TION |
|---|---|---|---|---|---|---|---|---|---|---|
| 1 | 8:30pm | 8:45pm | 15 | 200 | 60 | RAILWAY J | LINE M | STATION A | STATION D | – |
| 2 | 8:25pm | 8:50pm | 25 | 300 | 55 | BUS K | LINE S | IN FRONT OF STATION A | IN FRONT OF STATION D | – |
| 3 | 7:55pm | 8:20pm | 25 | 300 | 25 | BUS K | LINE S | IN FRONT OF STATION A | IN FRONT OF STATION D | – |
| 4 | 7:45pm | 8:00pm | 15 | 200 | 15 | RAILWAY J | LINE M | STATION A | STATION D | – |
| | | | | | | | | | | |

221

# FIG.23

231

| ACTION OPTION ID | ROUTE ID | DROP-IN PLACE NAME (FACILITY NAME) | DETAILED INFORMATION (URL) |
|---|---|---|---|
| 1-1 | 1 | RESTAURANT JAPAN | http://··· |
| 1-4 | 1 | FITNESS CLUB TOKYO | http://··· |
| 1-5 | 1 | FASHION LUNA | http://··· |
| 1-3 | 1 | SUPERMARKET FUJI | http://··· |
| 1-2 | 1 | CAFE MOCHA | http://··· |
| 2-1 | 2 | RESTAURANT JAPAN | http://··· |
| 2-4 | 2 | FITNESS CLUB TOKYO | http://··· |
| 2-5 | 2 | FASHION LUNA | http://··· |
| 2-3 | 1 | SUPERMARKET FUJI | http://··· |
| 2-2 | 1 | CAFE MOCHA | http://··· |
| 3-1 | 3 | SUPERMARKET FUJI | http://··· |
| 3-3 | 3 | FASHION LUNA | http://··· |
| 3-2 | 1 | CAFE MOCHA | http://··· |
| 4-1 | 4 | – | – |

# FIG.24

162 163 200

CANDIDATE ROUTES | CANDIDATE DROP-IN PLACES

165
161A

RESTAURANT JAPAN
DETAILS
COUPON

164

LINE M OF RAILWAY J ¥250
DEPART FROM STATION A AT 8:30 P.M. → ARRIVE AT STATION D AT 8:45 P.M.
DETAILS

166

CAFE MOCHA
DETAILS
COUPON

LINE S OF BUS K ¥300
DEPART FROM STATION A AT 8:25 P.M. → ARRIVE AT STATION D AT 8:50 P.M.

SUPERMARKET FUJI
DETAILS

LINE S OF BUS K ¥300
DEPART FROM STATION A AT 7:55 P.M. → ARRIVE AT STATION D AT 8:30 P.M.

FITNESS CLUB TOKYO
DETAILS
COUPON

LINE M OF RAILWAY J ¥250
DEPART FROM STATION A AT 7:45 P.M. → ARRIVE AT STATION D AT 8:00 P.M.

FASHION LUNA
DETAILS

# FIG.25

# FIG.26

300B

**ACTION OPTION PRESENTATION PROCESSING PART** — 340B

- INPUT RECEIVING PART — 341
- ROUTE EXTRACTING PART — 342
- CANDIDATE ROUTE CREATING PART — 343
- SATISFACTION LEVEL CALCULATING PART — 345
- EXCLUSION DETERMINING PART — 346
- DISPLAY LIST CREATING PART — 348B
- SCREEN DATA CREATING PART — 349

**USER DATABASE** — 310A

- CONGESTION LEVEL AND ACCEPTABLE LIMIT TABLE — 311
- WAITING TIME AND ACCEPTABLE LIMIT TABLE — 312
- TRANSPORTATION SATISFACTION LEVEL TABLE — 313
- USER DATA — 315

**TRANSPORTATION DATABASE** — 320

TERMINAL DEVICE — 200

EP 3 361 439 A1

# FIG.27

START

RECEIVE REQUEST FOR PRESENTING ACTION OPTIONS TOGETHER WITH DEPARTURE LOCATION AND DESTINATION LOCATION? — S2701

NO

YES

REFER TO TRANSPORTATION DATABASE AND EXTRACT CANDIDATE ROUTES — S2702

CREATE LIST OF CANDIDATE ROUTES INCLUDING WAITING TIMES UNTIL TRAVEL BEGINS AND CONGESTION LEVELS — S2703

$N = 1$ — S2704

CALCULATE SATISFACTION LEVEL WITH RESPECT TO $N^{th}$ CANDIDATE ROUTE — S2705

EXCLUDE CANDIDATE ROUTE WHOSE SATISFACTION LEVEL IS EQUAL TO OR LESS THAN THRESHOLD — S2706

S2708 — $N = N + 1$

NO

PROCESSING IS EXECUTED FOR ALL CANDIDATE ROUTES? — S2707

YES

CREATE DISPLAY LIST IN DESCENDING ORDER OF SATISFACTION LEVELS — S2709

CREATE SCREEN DATA BASED ON DISPLAY LIST AND SEND SCREEN DATA — S2710

END

# FIG.28

## FIG.29

TERMINAL DEVICE — 200

EVENT MANAGEMENT SERVER — 500

USER DATABASE — 310B

DROP-IN PLACE DATABASE — 330

ACTION OPTION PRESENTATION PROCESSING PART — 340C

100C / 300C

EP 3 361 439 A1

FIG.30

EP 3 361 439 A1

# FIG.31

START

S3101 RECEIVE REQUEST FOR PRESENTING ACTION OPTIONS TOGETHER WITH DEPARTURE LOCATION AND DESTINATION LOCATION? — NO

YES

OBTAIN EVENT INFORMATION BASED ON THE LOCATION INFORMATION — S3102

CREATE LIST OF CANDIDATE EVENTS INCLUDING WAITING TIMES UNTIL EVENTS START AND CONGESTION LEVELS — S3103

N = 1 — S3104

EXTRACT ACTION OPTIONS COMBINED WITH $N^{th}$ EVENT — S3105

CALCULATE SATISFACTION LEVELS WITH RESPECT TO RESPECTIVE ACTION OPTIONS — S3106

EXCLUDE ACTION OPTION WHOSE SATISFACTION LEVEL IS EQUAL TO OR LESS THAN THRESHOLD — S3107

S3108 NO — PROCESSING IS PERFORMED FOR ALL RESPECTIVE ACTION OPTIONS?

YES

OBTAIN PREDETERMINED NUMBER OF ACTION OPTIONS IN DESCENDING ORDER AND HOLD MAXIMUM SATISFACTION LEVEL — S3109

S3111 N = N + 1 ← NO — S3110 ACTION OPTIONS ARE EXTRACTED FOR ALL CANDIDATE EVENTS?

YES

CREATE DISPLAY LIST IN DESCENDING ORDER OF SATISFACTION LEVELS — S3112

CREATE SCREEN DATA BASED ON DISPLAY LIST AND SEND SCREEN DATA — S3113

END

50

# FIG.32

EP 3 361 439 A1

| EVENT ID | START TIME | END TIME | DURATION TIME $T_{m1}$ (MINUTES) | PRICE (¥) | WAITING TIME $T_{w1}$ (MINUTES) | CONGESTION LEVEL C1 (%) | TYPE M1 |
|----------|------------|----------|------------------|-----------|------------------|----------------|----------|
| 1 | 13:00pm | 15:00pm | 120 | 1500 | 60 | 40 | MOVIE |
| 2 | 13:30pm | 14:00pm | 30 | – | 90 | 70 | SHOPPING |
| | | | | | | | |

131A

## FIG.33

EP 3 361 439 A1

141A

| ACTION OPTION ID | SATISFAC-TION LEVEL V (UNIT: ¥) | EVENT ID | DROP-IN PLACE NAME (FACILITY NAME) | DETAILED INFORMATION (URL) | INCENTIVE INFORMATION (URL) |
|---|---|---|---|---|---|
| 1-1 | 215 | 1 | RESTAURANT JAPAN | http://··· | http://··· |
| 1-2 | 200 | 1 | CAFE MOCHA | http://··· | http://··· |
| 1-3 | 185 | 1 | SUPERMARKET FUJI | http://··· | – |
| 1-4 | 100 | 1 | FITNESS CLUB TOKYO | http://··· | http://··· |
| 1-5 | 110 | 1 | FASHION LUNA | http://··· | – |
| 2-1 | 170 | 2 | RESTAURANT JAPAN | http://··· | http://··· |
| 2-2 | 50 | 2 | CAFE MOCHA | http://··· | http://··· |
| 2-3 | −10 | 2 | SUPERMARKET FUJI | http://··· | – |
| 2-4 | −40 | 2 | FITNESS CLUB TOKYO | http://··· | http://··· |
| 2-5 | −60 | 2 | FASHION LUNA | http://··· | – |

# FIG.34

| EVENT | DROP-IN PLACE |
|---|---|

CURRENT LOCATION:
SHOPPING MALL A

▲

MOVIE B

13:00  START TIME

15:00  END TIME

RESTAURANT JAPAN | DETAILS | COUPON

CAFE MOCHA | DETAILS | COUPON

STORE C
LIMITED-TIME SALE

13:30～14:00

SUPERMARKET FUJI | DETAILS

FITNESS CLUB TOKYO | DETAILS | COUPON

FASHION LUNA | DETAILS

▼

## INTERNATIONAL SEARCH REPORT

| | International application No. |
|---|---|
| | PCT/JP2015/078718 |

### A. CLASSIFICATION OF SUBJECT MATTER
*G06Q30/02*(2012.01)i

According to International Patent Classification (IPC) or to both national classification and IPC

### B. FIELDS SEARCHED

Minimum documentation searched (classification system followed by classification symbols)
G06Q30/02

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2011-60059 A  (Hitachi, Ltd.),<br>24 March 2011 (24.03.2011),<br>particularly, paragraph [0017]<br>(Family: none) | 1-3,7-9<br>4-6,10-11 |
| Y<br>A | JP 2014-96114 A  (Fujitsu Ltd.),<br>22 May 2014 (22.05.2014),<br>particularly, paragraphs [0182] to [0204]<br>(Family: none) | 1-3,7-9<br>4-6,10-11 |
| Y<br>A | JP 2013-35411 A  (Toshiba Corp.),<br>21 February 2013 (21.02.2013),<br>particularly, paragraphs [0033] to [0036]<br>& CN 102929905 A | 1-3,7-9<br>4-6,10-11 |

| ☒  Further documents are listed in the continuation of Box C. | ☐  See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    17 December 2015 (17.12.15) | Date of mailing of the international search report<br>    28 December 2015 (28.12.15) |
|---|---|

| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |
|---|---|

Form PCT/ISA/210 (second sheet) (July 2009)

**INTERNATIONAL SEARCH REPORT**

| International application No. |
|---|
| PCT/JP2015/078718 |

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2005-32017 A  (Nippon Telegraph and Telephone Corp.),<br>03 February 2005 (03.02.2005),<br>particularly, paragraphs [0022] to [0026], [0034] to [0035]<br>(Family: none) | 7<br>1-6,8-11 |
| X<br>A | JP 2007-257168 A  (Zenrin DataCom Co., Ltd.),<br>04 October 2007 (04.10.2007),<br>particularly, paragraphs [0032] to [0033], [0063] to [0071]; fig. 1, 7<br>(Family: none) | 10<br>1-9,11 |

Form PCT/ISA/210 (continuation of second sheet) (July 2009)

## REFERENCES CITED IN THE DESCRIPTION

**Patent documents cited in the description**

• JP 2001337967 A